# EUROPÄISCHE PATENTSCHRIFT

(11) **EP 2 495 123 B1**
(45) Veröffentlichungstag und Bekanntmachung des Hinweises auf die Patenterteilung: **21.09.2016**
(21) Anmeldenummer: 12001268.7
(22) Anmeldetag: 27.02.2012
(51) Int. Cl.: B60K 23/04, B60K 23/08

(54) **Steuerverfahren für eine Kupplung im Antriebsstrang eines Kraftfahrzeugs**
Control method for a coupling in the power train of a motor vehicle
Procédé de commande pour un embrayage dans le flux d'entraînement d'un véhicule automobile

(30) Priorität: 28.02.2011 DE 102011012593
(43) Veröffentlichungstag der Anmeldung: 05.09.2012
(73) Patentinhaber: Engineering Center Steyr GmbH & Co KG, 4300 St. Valentin (AT)
(72) Erfinder: Brenner, Christoph, Dr., 4400 Steyr (AT); Frühwirth, Gerhard, 4274 Schönau (AT)
(74) Vertreter: Rausch, Gabriele

(56) Entgegenhaltungen:
- EP-B1- 1 468 860
- US-A1- 2010 252 348

## Beschreibung

Die Erfindung betrifft ein Verfahren zum Steuern wenigstens einer Kupplung in einem Antriebsstrang eines Kraftfahrzeugs. Insbesondere kann das Verfahren zum Steuern wenigstens einer formschlüssig wirksamen Kupplung einer Differentialsperre eines Geländefahrzeugs dienen.

Bei einem Kraftfahrzeug dient eine Kupplung im Antriebsstrang zum Ändern der Verteilung des Antriebsmoments auf die verschiedenen Achsen des Kraftfahrzeugs und/ oder auf die verschiedenen Räder einer jeweiligen Achse. Hierdurch soll insbesondere bei einer Fahrt im Gelände eine ausreichende Traktion in allen erdenklichen Fahrsituationen gewährleistet werden. Die jeweilige Kupplung ist hierzu beispielsweise einem Verteilergetriebe zugeordnet. Das Verteilergetriebe kann in Längsrichtung des Fahrzeugs wirksam sein, d.h. zwischen verschiedenen Achsen. Beispielsweise kann der Antriebsstrang ein Zwischenachs-Differentialgetriebe aufweisen, welches das Antriebsmoment permanent auf die beiden zugeordneten Achsen verteilt und welches mittels der Kupplung wahlweise gesperrt wird (so genannte Längsdifferentialsperre). Alternativ hierzu kann es sich um ein Verteilergetriebe des Typs "torque-on-demand" handeln, bei dem eine Primärachse ständig angetrieben wird und eine Sekundärachse mittels der Kupplung wahlweise zugeschaltet wird, d.h. zusätzlich angetrieben wird. Die Kupplung kann auch einem in Querrichtung wirksamen Achs-Differentialgetriebe zugeordnet sein, welches das Antriebsmoment auf die Räder der jeweiligen Achse verteilt und welches mittels der Kupplung wahlweise gesperrt wird (so genannte Querdifferentialsperre oder Achsdifferentialsperre). Schließlich kann die Kupplung auch einem zuschaltbaren Radantrieb des Antriebsstrangs zugeordnet sein, d.h. mittels der Kupplung kann das Antriebsmoment wahlweise auf ein einzelnes Rad übertragen werden.

Das Kraftfahrzeug kann zwei oder mehr Achsen besitzen, und dementsprechend können mehrere Kupplungen der genannten Art vorgesehen sein, beispielsweise eine oder mehrere Längsdifferentialsperren und zwei oder mehrere Querdifferentialsperren. Sofern die Betätigung von mehreren Kupplungen im Antriebsstrang weitestgehend automatisiert erfolgen soll, gestaltet sich die Steuerung der Kupplungen sehr komplex.

Besondere Anforderungen sind hierbei zu stellen, falls es sich um ein Geländefahrzeug handelt, insbesondere um ein Geländefahrzeug mit mehr als zwei Achsen. Bei einem Geländefahrzeug ist es besonders wichtig, dass ein Traktionsverlust frühzeitig und wirkungsvoll vermieden wird, da es ansonsten bei ungünstigen Fahrsituationen sehr schwierig sein kann, wieder in eine stabile Fahrsituation zurückzufinden (beispielsweise bei einem geringen oder sehr unterschiedlichen Reibungskoeffizienten des Untergrunds, einer Hanglage und/oder einer Seitenlage). Während die jeweilige Kupplung grundsätzlich als reibschlüssig wirksame Lamellenkupplung ausgebildet sein kann, werden bei geländegängigen Fahrzeugen typischerweise formschlüssige Kupplungen, d.h. Klauenkupplungen eingesetzt, um bei geringem Verschleiß hohe Drehmomente übertragen zu können.

Die Betätigung der jeweiligen Kupplung geschieht infolge einer entsprechenden Ansteuerung mittels eines geeigneten Aktuators, beispielsweise pneumatisch, hydraulisch, elektromechanisch oder elektromagnetisch. Um ein entsprechendes Steuersignal für die jeweilige Kupplung zu erzeugen, können Schlupfwerte ermittelt und ausgewertet werden, die einen momentanen Schlupf zwischen verschiedenen Achsen des Kraftfahrzeugs oder zwischen verschiedenen Rädern einer Achse repräsentieren. Es handelt sich also im weitesten Sinne um Drehzahldifferenzen oder Geschwindigkeitsdifferenzen, beispielsweise um die Drehzahldifferenz zwischen den beiden Ausgangswellen eines Differentialgetriebes oder um die Differenz zwischen den Raddrehzahlsignalen einer Achse. Beispielsweise kann der jeweilige Schlupfwert oder ein hieraus abgeleiteter Wert mit einem geeigneten Schwellenwert verglichen werden, um im Falle des Überschreitens des Schwellenwerts ein Steuersignal zum Betätigen der Kupplung zu erzeugen.

Sofern die ermittelten Schlupfwerte unmittelbar mit einem Schwellenwert verglichen werden, besteht jedoch die Gefahr eines zu frühen Schaltens der Kupplung, beispielsweise wenn lediglich kurzzeitig ein vergleichsweise großer Schlupf detektiert wird, der jedoch auch allein aus der Elastizität des Antriebsstrangs resultieren kann. Um dieses Problem zu umgehen, ist es möglich, die ermittelten Drehzahldifferenzen aufzusummieren, um Schlupfsummenwerte zu bilden, die mit einem Schlupfsummen-Schwellenwert verglichen werden. Ein derartiges Verfahren ist aus dem Dokument EP 0 644 077 B1 bekannt, bei dem bei stark ansteigender Drehzahldifferenz die Ansteuerung der Kupplung sehr schnell, bei geringer Drehzahldifferenz jedoch erst nach einer längeren Zeit erfolgen soll. Durch die Bildung von Schlupfsummen soll hier bei wechselndem Schlupf (voreilender Schlupf und nacheilender Schlupf) eine vorzeichenabhängige Bewertung erfolgen, um unnötige Schaltungen zu vermeiden. Dieses Dokument lehrt auch, für mehrere Kupplungen eines Antriebsstrangs eine hierarchische Struktur vorzusehen, wobei hierarchisch tiefere Kupplungen auch Steuersignale für hierarchisch höhere Kupplungen abgeben. Ein Nachteil des in dem Dokument EP 0 644 077 B1 beschriebenen Verfahrens besteht darin, dass Schlupfschwingungen, d.h. wiederholte Änderungen des Schlupfvorzeichens, die innerhalb eines begrenzten Zeitfensters auftreten, nicht adäquat berücksichtigt werden. Außerdem sind die erforderlichen Berechnungsschritte unerwünscht aufwendig.

Auch bei dem Dokument EP 1 468 860 B1 erfolgt ein Aufsummieren von Schlupfwerten bis zum Erreichen eines vorbestimmten Schwellenwerts, wobei die Berücksichtigung von voreilendem Schlupf und nacheilendem Schlupf getrennt durchgeführt wird, d.h. die Berechnungen und Auswertungen werden für die unterschiedlichen Vorzeichen der ermittelten Schlupfwerte getrennt durchgeführt. Ein Nachteil dieses Verfahrens besteht wiederum in der aufwendigen Berechnungsweise, da die Berechnungen im Prinzip doppelt ausgeführt werden müssen, nämlich sowohl für voreilenden Schlupf als auch für nacheilenden Schlupf. Eine möglichst schnelle Auswertung der ermittelten Schlupfwerte und entsprechende Erzeugung von Steuersignalen ist jedoch gerade bei formschlüssig wirksamen Kupplungen im Antriebsstrang eines Geländefahrzeugs von hoher Wichtigkeit, da ansonsten Drehzahldifferenzen entstehen, die ein rechtzeitiges Schließen der jeweiligen Kupplung unmöglich machen.

Das gattungsbildende Dokument US 2010/0252348 A1 beschreibt ein Hinterachs-Differential mit zwei Lamellenkupplungen, die wahlweise geschlossen werden, um letztlich ein Antriebsmoment auf die jeweilige Achswelle zu übertragen. Aus diesem Dokument sind ein Verfahren zum Steuern wenigstens einer Kupplung in einem Antriebsstrang eines Kraftfahrzeugs sowie ein Antriebsstrang eines Kraftfahrzeugs mit einer entsprechenden Steuereinrichtung bekannt, bei denen in einer jeweiligen Berechnungsschleife zumindest die folgenden Schritte durchgeführt werden: Ermitteln wenigstens eines Schlupfwerts, der einen momentanen Schlupf zwischen verschiedenen Rädern einer Achse repräsentiert; Bilden eines Absolutwerts des Schlupfswerts, der dem Betrag des Schlupfwerts entspricht; Vergleichen des Absolutwerts mit einem Schwellenwert; und Erzeugen eines Steuersignals zum Betätigen der Kupplung, falls der Absolutwert den Schwellenwert erreicht oder überschreitet.

Es ist eine Aufgabe der Erfindung, ein Steuerverfahren der vorstehend erläuterten Art zu schaffen, bei dem die erforderlichen Berechnungen und Auswertungen schnell und mit einfachen Mitteln durchgeführt werden können, um bei Verwendung einer kostengünstigen Steuereinrichtung die Steuersignale für die jeweilige Kupplung möglichst rasch erzeugen zu können, insbesondere bevor das Schließen einer formschlüssig wirksamen Kupplung aufgrund der entstehenden Drehzahldifferenzen überhaupt nicht mehr möglich ist. Insbesondere soll auch die Berücksichtigung von Schlupfschwingungen möglich sein. Ferner soll ein Antriebsstrang eines Kraftfahrzeugs angegeben werden, der wenigstens eine Kupplung und eine Steuereinrichtung zum Steuern der Kupplung aufweist.

Diese Aufgabe wird durch ein Verfahren mit den Merkmalen des Anspruchs 1 gelöst, und insbesondere dadurch, dass in einer jeweiligen Berechnungsschleife zumindest die folgenden Schritte durchgeführt werden:
- Ermitteln wenigstens eines Schlupfwerts, der einen momentanen Schlupf zwischen verschiedenen Achsen des Kraftfahrzeugs oder zwischen verschiedenen Rädern einer Achse repräsentiert;
- Bilden eines Absolutwerts des Schlupfwerts, der dem Betrag des Schlupfwerts entspricht;
- Aufsummieren des Absolutwerts oder eines hieraus abgeleiteten Ersatzwerts auf einen zuletzt gebildeten Schlupfsummenwert, um einen momentanen Schlupfsummenwert zu bilden;
- Vergleichen des momentanen Schlupfsummenwerts mit einem Schlupfsummen-Schwellenwert; und
- Erzeugen eines Steuersignals zum Betätigen der Kupplung, falls der momentane Schlupfsummenwert den Schlupfsummen-Schwellenwert erreicht oder überschreitet.

Bei dem Verfahren erfolgen in sich wiederholenden Berechnungsschleifen ein Erfassen und Aufbereiten von Schlupfwerten, ein Auswerten der Schlupfwerte und gegebenenfalls ein Erzeugen von Steuersignalen und ein entsprechendes Betätigen der jeweiligen Kupplung. Diese Schritte können in einer jeweiligen Berechnungsschleife für eine einzige Kupplung oder für mehrere Kupplungen eines Antriebsstrangs durchgeführt werden.

In einer jeweiligen Berechnungsschleife des Verfahrens wird wenigstens ein Schlupfwert ermittelt, der einen momentanen Schlupf zwischen verschiedenen Achsen des Kraftfahrzeugs repräsentiert (beispielsweise wenn die Kupplung einem Zwischenachs-Differentialgetriebe zugeordnet ist), oder einen momentanen Schlupf zwischen verschiedenen Rädern einer Achse (beispielsweise einer Querdifferentialsperre). Der jeweilige Schlupfwert kann beispielsweise die Dimension eines Winkels, eines Bogenmaßes, einer Drehzahl, einer Wegstrecke oder einer Geschwindigkeit besitzen. Hierbei handelt es sich bei dem jeweiligen Schlupfwert um eine Differenz zwischen zwei Signalen, die an verschiedenen Positionen des Antriebsstrangs erzeugt werden und eine jeweilige Drehstellung repräsentieren. Beispielsweise kann es sich um die Signale der bei einem ABS- oder ESP-System ohnehin vorhandenen Raddrehzahlsensoren handeln.

Erfindungsgemäß wird anhand des jeweiligen Schlupfwerts ein Absolutwert gebildet, der dem Betrag des ermittelten Schlupfwerts entspricht und vorzugsweise stets ein positives Vorzeichen besitzt. Mit anderen Worten werden negative Schlupfwerte in positive Werte umgewandelt. Somit kann nachfolgend grundsätzlich, mit Ausnahme der noch erläuterten negativen Ersatzwerte, mit positiven Werten gerechnet werden, wodurch sich die Berechnung vereinfacht. In äquivalenter Weise könnte der genannte Absolutwert, d.h. der Betrag des ermittelten Schlupfwerts, natürlich auch mit einem negativen Vorzeichen versehen werden, so dass nachfolgend grundsätzlich mit negativen Werten gerechnet würde, wodurch sich die Berechnung ebenfalls vereinfachen würde. Der Einfachheit halber wird bei der nachfolgenden Erläuterung der Erfindung jedoch unterstellt, dass der genannte Absolutwert ein positives Vorzeichen besitzen soll. Dies bedeutet, dass bei der äquivalenten Verwendung von Absolutwerten mit negativem Vorzeichen die nachfolgend genannten Vorzeichen und Schwellenwertvergleiche zu invertieren wären.

Der in der jeweiligen Berechnungsschleife gebildete Absolutwert, oder ein hieraus abgeleiteter Ersatzwert (wie nachfolgend noch erläutert wird), wird auf einen zuletzt gebildeten Schlupfsummenwert aufsummiert, um einen neuen, so genannten momentanen Schlupfsummenwert zu bilden. Mit anderen Worten wird der jeweilige Absolutwert oder Ersatzwert auf denjenigen Schlupfsummenwert aufaddiert, der in einer vorangehenden Berechnungsschleife als der momentane Schlupfsummenwert gebildet wurde. Bei dieser mathematischen Operation handelt es sich grundsätzlich um eine Summe, wobei die genannten Absolutwerte generell stets positive Werte sind, und dementsprechend steigt der momentane Schlupfsummenwert grundsätzlich an. Im Falle eines negativen Ersatzwerts entspricht diese Summenbildung jedoch letztlich einer Differenz, d.h. in diesem Fall vermindert sich der momentane Schlupfsummenwert gegenüber dem zuletzt gebildeten Wert.

Sofern das genannte Aufsummieren in quasi-kontinuierlicher oder kontinuierlicher Weise erfolgt, entspricht das Aufsummieren letztlich einem zeitlichen Aufintegrieren. Auch ein derartiges Aufintegrieren ist von der Erfindung noch umfasst, wobei der Einfachheit halber im Folgenden stets lediglich auf ein Aufsummieren Bezug genommen wird.

Nach dem Aufsummieren wird der hierdurch gebildete momentane Schlupfsummenwert mit einem Schlupfsummen-Schwellenwert verglichen. Bei diesem kann es sich um eine vorbestimmte Konstante handeln. Vorzugsweise wird der Schlupfsummen-Schwellenwert jedoch in Abhängigkeit von weiteren Parametern gewählt, beispielsweise in Abhängigkeit von dem Betrag eines Schlupfgradienten, dem Vorzeichen eines Schlupfgradienten, der Fahrgeschwindigkeit und/oder einer momentanen Drehmomentanforderung. Derartige zusätzliche Parameter können beispielsweise dadurch berücksichtigt werden, dass ein Voreinstellungswert für den Schlupfsummen-Schwellenwert mit einem variablen Gewichtungsfaktor multipliziert wird.

Falls der genannte Vergleich ergibt, dass der momentane Schlupfsummenwert den Schlupfsummen-Schwellenwert erreicht oder überschreitet, wird ein Steuersignal zum Betätigen der Kupplung erzeugt, insbesondere um die Kupplung zu schließen. Das Steuersignal muss jedoch nicht unmittelbar zum Betätigen der Kupplung führen, sondern hierfür können auch noch weitere Bedingungen berücksichtigt werden, beispielsweise eine Drehzahldifferenz an der Kupplung, die Fahrgeschwindigkeit, ein detektierter Querbeschleunigungswert, ein detektierter Steigungswert, ein Zustandsparameter des Aktuators der Kupplung (z.B. Druck) oder dergleichen.

Ein wichtiges Merkmal der Erfindung besteht somit darin, dass für das Aufsummieren der ermittelten Schlupfwerte grundsätzlich die Absolutwerte verwendet werden, also lediglich der (positive) Betrag des jeweiligen Schlupfwerts. Hierdurch wird eine vorteilhafte Reduzierung der Rechenzeiten, der erforderlichen Rechenkapazität und des Speicherbedarfs erzielt. Da nach dem Bilden der Absolutwerte, abgesehen von den nachstehend noch erläuterten negativen Ersatzwerten, prinzipiell mit positiven Werten gearbeitet wird, vereinfachen sich die erforderlichen mathematischen Operationen. Eine parallele Auswertung von positiven und negativen Schlupfwerten mit einer entsprechend erhöhten Rechenzeit und einem doppelten Speicherbedarf, wie aus dem Dokument EP 1 468 860 B1 bekannt, entfällt. Die erforderlichen mathematischen Operationen können sehr schnell durchgeführt werden, so dass in Echtzeit oder innerhalb von wenigen Millisekunden auf veränderte Bedingungen reagiert werden kann, um die jeweilige Kupplung möglichst rasch entsprechend anzusteuern. Hierdurch wird nicht nur eine optimale Traktion gewährleistet, da sich die Drehzahldifferenz beispielsweise zwischen einem durchrutschenden Rad und einem noch nicht durchrutschenden Rad nicht oder lediglich geringfügig erhöht.

Sondern es wird auch verhindert, dass die jeweilige Kupplung wegen einer zwischenzeitlich zu großen Drehzahldifferenz überhaupt nicht mehr geschlossen werden kann. Ferner trägt eine möglichst kurze Rechenzeit zu einer Schonung der Komponenten des Antriebsstrangs bei, insbesondere wenn bei einer bereits entstehenden Drehzahldifferenz eine formschlüssig wirksame Kupplung geschlossen wird.

Ferner können Schlupfschwingungen, die um den Nullpunkt erfolgen, ohne besondere Zusatzmaßnahmen berücksichtigt werden. Eine Schlupfschwingung liegt vor, wenn sich das Vorzeichen der ermittelten Schlupfwerte innerhalb eines begrenzten Zeitfensters mehrmals ändert, d.h. wenn eine wiederholte Änderung zwischen voreilendem Schlupf und nacheilendem Schlupf eintritt. Derartige Schlupfschwingungen können beispielsweise aus so genannten "Stick-Slip-Effekten" an den Reifen resultieren oder beim Befahren von so genannten Waschbrettpisten auftreten. Begünstigt werden derartige Schlupfschwingungen durch eine Leichtbauweise, bei der der Antriebsstrang eine vergleichsweise geringe Torsionssteifigkeit besitzt, insbesondere in Verbindung mit langen Drehmomentverbindungen von der Antriebseinheit bis zu den Rädern und mit hohen Übersetzungen und vielen Übersetzungsstufen, wie dies typischerweise im Antriebsstrang eines Geländefahrzeugs der Fall ist.

Eine automatische Berücksichtigung von Schlupfschwingungen wird bei dem erfindungsgemäßen Steuerverfahren dadurch erreicht, dass sowohl die positiven Schlupfwerte als auch die negativen Schlupfwerte durch deren betragsmäßige Berücksichtigung (in Form der genannten Absolutwerte) zu einer Erhöhung des momentanen Schlupfsummenwerts beitragen. Somit führt das Auftreten einer Schlupfschwingung inhärent zu einer kontinuierlichen Erhöhung des Schlupfsummenwerts, wobei die Erhöhung umso schneller ist, je größer die Amplitude der Schwingung ist.

Nach Erreichen des Schlupfsummen-Schwellenwerts führt die Schlupfschwingung zu dem Erzeugen eines Steuersignals. Durch das Bilden und Auswerten der Absolutwerte ist es bei dem erfindungsgemäßen Verfahren irrelevant, welche Seite der Kupplung schneller dreht als die andere. Bei einem vorzeichenbehafteten Aufsummieren der Schlupfwerte würde hingegen die Amplitude der Schlupfschwingung nicht berücksichtigt werden, sondern der gebildete Schlupfsummenwert könnte lediglich den Mittelwert der Schlupfschwingung erreichen. Dies würde zu keinem oder lediglich einem verzögerten Ansteuern der Kupplung führen.

Zusätzlich zu der erläuterten inhärenten Berücksichtigung von Schlupfschwingungen können auch eine Filterung nach verschiedenen Arten von Schlupfschwingungen und eine entsprechende Berücksichtigung durch Anwendung von Gewichtungsfaktoren vorgesehen sein, wie nachfolgend noch erläutert wird.

Was das Bilden und Berücksichtigen von Absolutwerten der Schlupfwerte betrifft, so erwähnt das eingangs genannte Dokument EP 1 468 860 B1 zwar die Bildung des Absolutwerts einer vorhandenen Schlupfgeschwindigkeit. Allerdings dient dieser Absolutwert lediglich der Auswahl einer von mehreren Kupplungen, die vorrangig angesteuert werden soll. Der Absolutwert wird hier also nicht aufsummiert, um einen Schlupfsummenwert zu bilden, sondern dies erfolgt bei dem Dokument EP 1 468 860 B1 durch Aufsummieren der vorzeichenbehafteten Schlupfgeschwindigkeiten.

Im Übrigen ist anzumerken, dass die vorstehend wiedergegebenen Schritte des erfindungsgemäßen Steuerverfahrens natürlich nur die prinzipielle Vorgehensweise darstellen. Zusätzlich können weitere Auswertungen vorgenommen und weitere Abhängigkeiten berücksichtigt werden, wie teilweise bereits aus dem Stand der Technik bekannt ist. Insbesondere können für das Ermitteln der Schlupfwerte zusätzliche Signale berücksichtigt werden, beispielsweise ein Lenkwinkel. Anhand der zur Verfügung stehenden Eingangssignale können die bei dem erfindungsgemäßen Verfahren verwendeten Schwellenwerte und/oder Filtergrößen berechnet oder modifiziert werden.

Das erfindungsgemäße Steuerverfahren kann bei unterschiedlichen Konfigurationen eines Antriebsstrangs eines Kraftfahrzeugs Anwendung finden, beispielsweise für eine Kupplung eines in Längsrichtung wirksamen Verteilergetriebes, welches das Antriebsmoment auf verschiedene Achsen des Kraftfahrzeugs verteilt (permanent oder zuschaltbar), oder für eine Kupplung eines in Querrichtung wirksamen Differentialgetriebes, welches das Antriebsmoment auf die Räder einer jeweiligen Achse verteilt, oder für eine Kupplung eines zuschaltbaren Radantriebs. Das Kraftfahrzeug kann zwei oder mehr Achsen besitzen, und dementsprechend können in dem Antriebsstrang mehrere Kupplungen vorgesehen sein, die nach dem erfindungsgemäßen Verfahren gesteuert werden, insbesondere in einer Konfiguration als permanenter Allradantrieb oder zuschaltbarer Allradantrieb, oder in einer Konfiguration mit wenigstens einer zuschaltbaren Achse oder mit wenigstens einem zuschaltbaren Radantrieb.

Die Erfindung bezieht sich ferner auf einen Antriebsstrang eines Kraftfahrzeugs, mit wenigstens einer Kupplung, insbesondere wenigstens einer formschlüssig wirksamen Kupplung einer Differentialsperre eines Geländefahrzeugs, und mit einer Steuereinrichtung, die dazu ausgebildet ist, das vorstehend erläuterte Verfahren durchzuführen.

Vorteilhafte Ausführungsformen der Erfindung sind nachfolgend und in den abhängigen Ansprüchen beschrieben.

Während des Steuerverfahrens wird in den aufeinander folgenden Berechnungsschleifen der jeweilige Absolutwert des ermittelten Schlupfwerts (oder ein hieraus abgeleiteter Ersatzwert) auf den in einer vorhergehenden Berechnungsschleife gebildeten Schlupfsummenwert aufsummiert. Bei einer erstmaligen Durchführung des Schritts des Aufsummierens wird der Absolutwert oder Ersatzwert vorzugsweise auf einen vorbestimmten Anfangswert aufsummiert.

Sofern in dem Antriebsstrang Schlupfschwingungen auftreten, werden diese - wie vorstehend erläutert - aufgrund des Bildens und Aufsummierens von Absolutwerten der Schlupfwerte inhärent berücksichtigt. Allerdings kann durch zusätzliche Auswertung der Schlupfwerte geprüft werden, ob tatsächlich eine Schlupfschwingung vorliegt, wobei zutreffendenfalls der zuletzt gebildete oder der momentane Schlupfsummenwert modifiziert wird. Diese Prüfung kann insbesondere in oder nach dem genannten Schritt des Ermittelns von Schlupfwerten erfolgen. Das Modifizieren des Schlupfsummenwerts kann insbesondere vor oder in dem genannten Schritt des Aufsummierens erfolgen. Durch ein Modifizieren des zuletzt gebildeten Schlupfsummenwerts, welcher dann in der momentanen Berechnungsschleife dem genannten Schritt des Aufsummierens zugrunde gelegt wird, kann die Reaktion auf eine Schlupfschwingung noch weiter verbessert werden. Dies kann alternativ auch dadurch erreicht werden, dass vor dem genannten Schritt des Vergleichens des momentanen Schlupfsummenwerts der Schlupfsummen-Schwellenwert modifiziert wird.

Insbesondere kann danach gefiltert werden, ob die Schlupfschwingung aus Bodenunebenheiten oder sonstigen äußeren Störeinflüssen resultiert, oder ob hingegen die Schlupfschwingung aus Elastizitäten des Antriebsstrangs herrührt. Ferner kann aufgrund einer zusätzlichen Prüfung auf Vorliegen einer Schlupfschwingung ein zu frühes oder zu oftmaliges Ansteuern der Kupplung verhindert werden, nämlich wenn die Schlupfschwingung lediglich für eine kurze Zeitdauer, jedoch mit einer großen Amplitude auftritt.

Um den jeweiligen Schlupfsummenwert in diesem Sinne zu modifizieren, kann der momentane oder der zuletzt gebildete Schlupfsummenwert beispielsweise mit einem Gewichtungsfaktor multipliziert werden, der einen Wert zwischen Null und Eins besitzt. Um den Schlupfsummen-Schwellenwert zu modifizieren, kann der Schlupfsummen-Schwellenwert mit einem positiven Gewichtungsfaktor größer Eins multipliziert werden. In beiden Fällen kann der jeweilige Gewichtungsfaktor eine vorbestimmte Konstante sein, oder der Gewichtungsfaktor ist abhängig von weiteren Parametern, beispielsweise von der Schwingungsamplitude, dem Betrag eines Schlupfgradienten, dem Vorzeichen eines Schlupfgradienten, der Fahrgeschwindigkeit oder einer momentanen Drehmomentanforderung.

Für die genannte Prüfung, ob eine Schlupfschwingung vorliegt, wird vorzugsweise überwacht, ob die ermittelten Schlupfwerte innerhalb eines vorbestimmten Zeitraums oder innerhalb einer vorbestimmten Anzahl von Berechnungsschleifen wenigstens einmal (vorzugsweise mehrmals) das Vorzeichen wechseln, d.h. gemäß einer vorbestimmten Mindestanzahl von Vorzeichenwechseln. Mit anderen Worten wird geprüft, ob innerhalb eines vorbestimmten Zeitfensters ein einmaliger oder mehrmaliger Wechsel zwischen voreilendem und nacheilendem Schlupf erfolgt. Vorzugsweise werden hierbei ein positiver und ein negativer Ansprechschwellenwert berücksichtigt, d.h. ein gültiger Vorzeichenwechsel liegt nur dann vor, wenn der ermittelte Schlupfwert ausgehend von einem voreilendem Schlupf einen negativen Ansprechschwellenwert unterschreitet oder ausgehend von einem nacheilendem Schlupf einen positiven Ansprechschwellenwert überschreitet. Es ist zu beachten, dass eine derartige Prüfung auf Vorliegen einer Schlupfschwingung anhand der positiven und negativen Schlupfwerte durchgeführt wird, d.h. nicht anhand der genannten Absolutwerte.

Gemäß einer Ausführungsform kann für die Prüfung, ob eine Schlupfschwingung vorliegt, beispielsweise ein Schlupfschwingungs-Überwachungswert stets um einen vorbestimmten Wert erhöht werden, falls ein Vorzeichenwechsel der ermittelten Schlupfwerte festgestellt wird, wobei der Schlupfschwingungs-Überwachungswert jedoch um einen vorbestimmten Wert verringert wird, wenn ein vorbestimmtes Zeitintervall oder eine vorbestimmte Anzahl von Berechnungsschleifen verstrichen ist, so dass hierdurch der Schlupfschwingungs-Überwachungswert auch wieder verringert wird. Bei dieser Ausführungsform wird das Vorliegen einer Schlupfschwingung festgestellt, falls der Schlupfschwingungs-Überwachungswert einen Schlupfschwingungs-Schwellenwert erreicht oder überschreitet. Zu Beginn einer derartigen Überwachung kann der Schlupfschwingungs-Überwachungswert beispielsweise auf den Wert Null gesetzt werden. Der Schlupfschwingungs-Überwachungswert kann beispielsweise auch dann zurück auf den Wert Null gesetzt werden, wenn nach Verstreichen eines vorbestimmten Zeitintervalls oder einer vorbestimmten Anzahl von Berechnungsschleifen kein Vorzeichenwechsel festgestellt wird. Der genannte Schlupfschwingungs-Schwellenwert kann eine Konstante sein, oder dieser Wert ist abhängig von weiteren Parametern, beispielsweise dem Betrag eines Schlupfgradienten, dem Vorzeichen eines Schlupfgradienten, der Fahrgeschwindigkeit oder einer momentanen Drehmomentanforderung.

Generell kann für die ermittelten Schlupfwerte eine Filterung im Sinne der Berücksichtigung einer Ansprechschwelle vorgenommen werden. Dies ist mit besonders geringem Aufwand möglich, falls die Filterung anhand der Absolutwerte erfolgt, da dann stets lediglich Werte mit positivem Vorzeichen berücksichtigt werden müssen.

Daher wird gemäß einer bevorzugten Ausführungsform der Absolutwert des jeweiligen Schlupfwerts (oder ein hieraus zuvor bereits abgeleiteter Ersatzwert) mit einem Schlupfansprech-Schwellenwert verglichen, wobei vor oder in dem Schritt des Aufsummierens der Absolutwert (bzw. der zuvor bereits abgeleitete Ersatzwert) durch einen Ersatzwert ersetzt wird, der den Wert Null oder einen negativen Wert besitzt, falls der Absolutwert (bzw. der zuvor bereits abgeleitete Ersatzwert) kleiner ist als der Schlupfansprech-Schwellenwert. Mit anderen Worten werden betragsmäßig geringe Schlupfwerte auf den Wert Null gesetzt und somit für das Bilden des momentanen Schlupfsummenwerts ignoriert, oder betragsmäßig geringe Schlupfwerte werden auf einen negativen Ersatzwert gesetzt. Durch die letztgenannte Variante kann die nachstehend noch erläuterte Verringerung des Schlupfsummenwerts auf besonders einfache Weise verwirklicht werden.

Falls der Absolutwert (bzw. der zuvor bereits abgeleitete Ersatzwert) größer ist als der Schlupfansprech-Schwellenwert, so wird der Absolutwert (bzw. der zuvor bereits abgeleiteter Ersatzwert) vorzugsweise durch einen Ersatzwert ersetzt, der einer Differenz zwischen dem Absolutwert (bzw. dem zuvor bereits abgeleiteten Ersatzwert) und dem Schlupfansprech-Schwellenwert entspricht. Auch hierdurch kann die nachstehend noch erläuterte Verringerung des Schlupfsummenwerts auf besonders einfache Weise verwirklicht werden.

Der genannte Schlupfansprech-Schwellenwert kann eine Konstante sein, oder dieser Schwellenwert ist abhängig von weiteren Parametern, beispielsweise von dem Betrag eines Schlupfgradienten, dem Vorzeichen eines Schlupfgradienten, der Fahrgeschwindigkeit oder einer momentanen Drehmomentanforderung.

Gemäß einer bevorzugten Ausführungsform erfolgt in den Berechnungsschleifen eine geregelte Verringerung des Schlupfsummenwerts. Dies kann in grundsätzlich jeder Berechnungsschleife oder lediglich dann geschehen, wenn der in der jeweiligen Berechnungsschleife gebildete Absolutwert des Schlupfwerts unter einen vorbestimmten Schwellenwert füllt. In beiden Fällen wird der momentane Schlupfsummenwert um einen künstlichen Schlupfwert verringert, vorzugsweise anstelle des Aufsummierens des Absolutwerts auf den zuletzt gebildeten Schlupfsummenwert. Dies kann auf besonders einfache Weise dadurch geschehen, dass der künstliche Schlupfwert als ein negativer Ersatzwert auf den zuletzt gebildeten Schlupfsummenwert aufaddiert wird, so dass letztlich eine Differenzbildung erfolgt.

Durch eine derartige geregelte Verringerung des Schlupfsummenwerts wird verhindert, dass der Schlupfsummenwert stetig ansteigt, selbst wenn kein oder nur noch ein geringfügiger Schlupf vorliegt. Stattdessen ist eine Verringerung des zuletzt gebildeten Schlupfsummenwerts möglich, die einerseits flexibel an die momentane Fahrsituation anpassbar ist und andererseits gut reproduzierbar ist. Insbesondere kann bei einem lediglich langsam abnehmenden Schlupf ein unerwünschtes sogenanntes Schaltpendeln, d.h. mehrmaliges Öffnen und Schließen der Kupplung in einem kurzen Zeitraum verhindert werden. Durch die Verwendung vorbestimmter negativer Ersatzwerte kann nämlich eine schnellere Verringerung des momentanen Schlupfsummenwerts auch dann erzielt werden, wenn die tatsächlichen Schlupfwerte betragsmäßig relativ gering sind.

Durch eine geregelte Verringerung des Schlupfsummenwerts ergibt sich für den Fahrer des Kraftfahrzeugs auch besser das Bild einer voraussehbaren, zuverlässigen Kupplungsschaltung. Insbesondere kann durch die Verwendung von vorbestimmten negativen Ersatzwerten verhindert werden, dass die Ansteuerung der Kupplung übermäßig von der (eventuell bereits weit zurückliegenden) Historie der früheren Schlupfwerte abhängt und hierdurch für den Fahrer schlecht vorhersehbar ist. Bei bekannten Steuerverfahren kann hingegen beispielsweise die Situation auftreten, dass eine Kupplung unerwartet frühzeitig oder häufig angesteuert wird, da ein hoher Schlupfsummenwert auch dann erreicht wird, wenn das Vorzeichen der einzelnen Schlupfwerte über längere Zeit positiv ist, obgleich die einzelnen Schlupfwerte betragsmäßig sehr gering und somit tatsächlich vernachlässigbar sind. Falls hingegen in einer derartigen Situation der Schlupfsummenwert verringert wird, kann ein zu frühzeitiges oder häufiges Ansteuern der Kupplung verhindert werden, und der Fahrer hat nicht den Eindruck einer willkürlichen Kupplungsschaltung.

Bezüglich einer derartigen Verringerung des Schlupfsummenwerts ist es möglich, dass vor oder in dem Schritt des Aufsummierens der Absolutwert des Schlupfwerts oder ein hieraus bereits abgeleiteter Ersatzwert grundsätzlich um einen Schlupfreduzierungswert verringert wird, um fallweise einen positiven oder negativen Ersatzwert zu bilden. Mit anderen Worten ist der genannte Schlupfreduzierungswert derart gewählt, dass einige der in verschiedenen Berechnungsschleifen gebildeten Ersatzwerte positiv sind und die anderen Ersatzwerte negativ sind.

Alternativ hierzu ist es bezüglich der erläuterten Verringerung des Schlupfsummenwerts auch möglich, dass in der jeweiligen Berechnungsschleife der Absolutwert des Schlupfwerts oder ein hieraus bereits abgeleiteter Ersatzwert mit einem Schlupfreduzierungs-Schwellenwert verglichen wird, wobei vor oder in dem Schritt des Aufsummierens der Absolutwert oder der hieraus bereits abgeleitete Ersatzwert durch einen Ersatzwert mit negativem Vorzeichen ersetzt wird, falls der Absolutwert oder der hieraus bereits abgeleitete Ersatzwert den Schlupfreduzierungs-Schwellenwert unterschreitet. Falls der Absolutwert oder der hieraus bereits abgeleitete Ersatzwert den Schlupfreduzierungs-Schwellenwert überschreitet, wird der Absolutwert oder der hieraus bereits abgeleitete Ersatzwert optional durch einen Ersatzwert mit positivem Vorzeichen ersetzt, der einer Differenz zwischen dem Absolutwert (bzw. dem zuvor bereits abgeleiteten Ersatzwert) und dem Schlupfreduzierungs-Schwellenwert entspricht. Der genannte Schlupfreduzierungs-Schwellenwert kann eine vorbestimmte Konstante sein. Vorzugsweise ist der Schlupfreduzierungs-Schwellenwert jedoch von weiteren Parametern abhängig, wie beispielsweise dem Betrag eines Schlupfgradienten, dem Vorzeichen eines Schlupfgradienten, der Fahrgeschwindigkeit oder einer momentanen Drehmomentanforderung. Insbesondere kann der Schlupfreduzierungs-Schwellenwert auch von dem Vorliegen von Schlupfschwingungen abhängig gewählt werden. Entsprechendes gilt für den negativen Ersatzwert, d.h. auch dieser kann eine Konstante sein oder in Abhängigkeit von verschiedenen Parametern gewählt werden, wie beispielsweise der Fahrgeschwindigkeit oder einer momentanen Drehmomentanforderung.

Sofern sowohl eine Filterung mittels des genannten Schlupfansprech-Schwellenwerts als auch eine Verringerung des Schlupfsummenwerts anhand des genannten Schlupfreduzierungs-Schwellenwerts erfolgt, so ist es bevorzugt, wenn erst die Filterung und danach die Reduzierung durchgeführt wird. Mit anderen Worten wird zunächst der Absolutwert des Schlupfwerts mit einem Schlupfansprech-Schwellenwert verglichen, um in Abhängigkeit von dem Ergebnis dieses Vergleichs einen Ersatzwert zu bilden. Dieser Ersatzwert wird danach mit einem Schlupfreduzierungs-Schwellenwert verglichen, um in Abhängigkeit von dem Ergebnis dieses Vergleichs den Ersatzwert gegebenenfalls durch einen anderen Ersatzwert mit negativem Vorzeichen zu ersetzen. Der Schlupfansprech-Schwellenwert und der Schlupfreduzierungs-Schwellenwert können hierbei verschieden sein und insbesondere auch von verschiedenen Parametern abhängen.

Im Zusammenhang mit der erläuterten Reduzierung des Schlupfsummenwerts ist es bevorzugt, wenn in einer jeweiligen Berechnungsschleife der momentane Schlupfsummenwert auf den Wert des Schlupfsummen-Schwellenwerts gesetzt wird, falls der momentane Schlupfsummenwert den Schlupfsummen-Schwellenwert überschreitet, d.h. es wird eine Obergrenze gesetzt. Alternativ oder zusätzlich kann in einer jeweiligen Berechnungsschleife auch geprüft werden, ob der momentane Schlupfsummenwert ein negatives Vorzeichen besitzt (d.h. kleiner als Null ist), wobei zutreffendenfalls der momentane Schlupfsummenwert auf den Wert Null gesetzt wird, d.h. es wird eine Untergrenze gesetzt. Somit wird noch besser erreicht, dass der Schlupfsummenwert auch nach längerer Zeit reproduzierbare Ausgangswerte für das spätere Aufsummieren der Absolutwerte oder Ersatzwerte annimmt, so dass das Steuerverhalten der Kupplung für den Fahrer besser vorhersehbar ist und nicht etwa von einer übermäßig weit zurückliegenden Historie abhängt.

Alternativ oder zusätzlich zu der bereits erläuterten Filterung der Absolutwerte anhand eines Schlupfansprech-Schwellenwerts kann eine bedarfsgerechte Filterung in Abhängigkeit von verschiedenen Parametern erfolgen, die die momentane Fahrsituation auf unterschiedliche Weise charakterisieren. Als Ergebnis einer solchen Filterung kann ein Ersatzwert für den Absolutwert (oder für einen bereits zuvor hieraus abgeleiteten Ersatzwert) gebildet werden, insbesondere indem der Absolutwert (oder der hieraus bereits abgeleitete Ersatzwert) mit einem Gewichtungsfaktor multipliziert wird. Sofern mehrere verschiedene Filterungen vorgenommen werden, können mehrere hieraus resultierende Gewichtungsfaktoren miteinander multipliziert werden, oder stattdessen erfolgt eine Priorisierung, d.h. von den ermittelten Gewichtungsfaktoren wird der relevanteste ausgewählt und mit dem Absolutwert oder Ersatzwert multipliziert (z.B. der höchste Gewichtungsfaktor oder der eine Schlupfschwingung repräsentierende Gewichtungsfaktor).

Insbesondere kann auf diese Weise eine Schlupfzunahme berücksichtigt werden. Hierzu ist es bevorzugt, wenn ein Schlupfzunahmewert gebildet wird, der einen zeitlichen Gradienten einer Schlupfzunahme repräsentiert, wobei vor oder in dem Schritt des Aufsummierens der Absolutwert oder ein hieraus bereits abgeleiteter Ersatzwert durch einen Ersatzwert ersetzt wird, der einem Produkt aus dem Absolutwert oder dem hieraus bereits abgeleiteten Ersatzwert einerseits und aus einem Schlupfzunahme-Gewichtungsfaktor andererseits entspricht, welcher von dem gebildeten Schlupfzunahmewert abhängt. Somit ist es möglich, bei Vorliegen einer starken Schlupfzunahme den Schlupfsummenwert besonders schnell ansteigen zu lassen, um frühzeitig den Schlupfsummen-Schwellenwert zu erreichen und somit ein Ansteuern der Kupplung auszulösen.

Um den genannten Schlupfzunahmewert zu bilden, kann beispielsweise eine Differenz zwischen dem in der momentanen Berechnungsschleife gebildeten Absolutwert und dem in einer vorhergehenden Berechnungsschleife gebildeten Absolutwert gebildet werden. Vorzugsweise wird diese Differenz noch durch einen Wert dividiert, welcher die Zeitdauer zwischen der vorhergehenden Berechnungsschleife und der momentanen Berechnungsschleife repräsentiert. Ferner kann optional berücksichtigt werden, ob die zugrunde liegenden Schlupfwerte dasselbe Vorzeichen besitzen, wobei lediglich dann eine Schlupfzunahme angenommen wird, wenn Gleichheit der Vorzeichen besteht.

Vorzugsweise wird der genannte Schlupfzunahme-Gewichtungsfaktor auf einen positiven Wert größer Eins gesetzt, falls der gebildete Schlüpfzunahmewert einen positiven zeitlichen Gradienten einer Schlupfzunahme repräsentiert.

Weiterhin ist es bevorzugt, dass der Schlupfzunahme-Gewichtungsfaktor umso größer gewählt wird, je größer der gebildete Schlupfzunahmewert ist. Hierdurch kann erreicht werden, dass bei einem schnellen Ansteigen des Schlupfs die Kupplung rasch geschlossen wird, bevor eine noch zulässige Drehzahldifferenz an der Kupplung überschritten wird.

Der Schlupfzunahme-Gewichtungsfaktor kann variabel gewählt werden, beispielsweise in Abhängigkeit von der Fahrgeschwindigkeit oder einer momentanen Drehmomentanforderung.

Falls hingegen der gebildete Schlupfzunahmewert eine Schlupfabnahme repräsentiert, d.h. falls der Schlupfzunahmewert einen negativen zeitlichen Gradienten der Schlupfzunahme repräsentiert, so wird der Schlupfzunahme-Gewichtungsfaktor vorzugsweise auf den Wert Eins gesetzt. Dies bedeutet, dass die Multiplikation mit dem Absolutwert oder Ersatzwert wirkungslos bleibt.

Alternativ oder zusätzlich zu einer derartigen Berücksichtigung einer Schlupfzunahme kann geprüft werden, ob eine Schlupfschwingung vorliegt. Ähnlich wie bereits für das Modifizieren des Schlupfsummenwerts in Abhängigkeit von dem Vorliegen einer Schlupfschwingung erläutert, kann also auch der jeweilige Absolutwert oder Ersatzwert modifiziert werden, um den besonderen Umständen einer Schlupfschwingung Rechnung zu tragen. Dies ermöglicht insbesondere eine Unterscheidung zwischen realen Schwingungen aufgrund von Schlupf (z.B. "Stick-Slip-Effekte" oder Befahren von Waschbrettpisten, wie bereits erläutert) und scheinbar auftretenden Schwingungen (die beispielsweise lediglich von den Stollen von Geländereifen herrühren). Hierzu ist es bevorzugt, wenn geprüft wird, ob eine Schlupfschwingung vorliegt, wobei zutreffendenfalls vor oder in dem Schritt des Aufsummierens der Absolutwert oder ein hieraus bereits abgeleiteter Ersatzwert durch einen Ersatzwert ersetzt wird, der einem Produkt aus dem Absolutwert oder dem hieraus bereits abgeleiteten Ersatzwert einerseits und aus einem Schlupfschwingungs-Gewichtungsfaktor andererseits entspricht.

Für die Prüfung, ob eine Schlupfschwingung vorliegt, kann insbesondere überwacht werden, ob die ermittelten Schlupfwerte innerhalb eines vorbestimmten Zeitraums oder innerhalb einer vorbestimmten Anzahl von Berechnungsschleifen wenigstens einmal (vorzugsweise mehrmals) das Vorzeichen wechseln, wie im Zusammenhang mit einem Modifizieren des Schlupfsummenwerts bereits erläutert wurde. Insbesondere können hierbei ein positiver und ein negativer Ansprechschwellenwert berücksichtigt werden.

Der genannte Schlupfschwingungs-Gewichtungsfaktor wird vorzugsweise auf einen positiven Wert ungleich Eins gesetzt (d.h. größer Eins oder kleiner Eins), falls festgestellt wird, dass eine Schlupfschwingung vorliegt. Falls hingegen festgestellt wird, dass keine Schlupfschwingung vorliegt, wird der Schlupfschwingungs-Gewichtungsfaktors vorzugsweise auf den Wert Eins gesetzt, d.h. die Multiplikation mit dem Absolutwert oder Ersatzwert bleibt dann wirkungslos. Der Schlupfschwingungs-Gewichtungsfaktor kann von verschiedenen Parametern abhängig sein, beispielsweise von der Fahrgeschwindigkeit oder der momentanen Drehmomentanforderung. Insbesondere kann vorgesehen sein, dass bei Feststellen einer Schlupfschwingung auch noch nach der Art der Schlupfschwingung unterschieden wird (reale Schwingung oder scheinbar auftretende Schwingung, wie vorstehend erläutert), wobei in Abhängigkeit hiervon ein Schlupfschwingungs-Gewichtungsfaktor größer Eins oder kleiner Eins gewählt wird.

Was die Betätigung der Kupplung betrifft, so ist es im Falle einer formschlüssig wirksamen Kupplung einer Differentialsperre bevorzugt, dass die Kupplung in Abhängigkeit von dem erzeugten Steuersignal für eine vorbestimmte Mindesthaltedauer in Schließrichtung betätigt wird. Hierfür kann die Kupplung in Öffnungsrichtung vorgespannt sein, wobei die Kupplung selbsttätig öffnet, sobald die Kupplung nicht mehr in Schließrichtung betätigt wird und kein oder lediglich ein geringes Drehmoment über die Kupplung übertragen wird. Die genannte Mindesthaltedauer kann dadurch verwirklicht werden, dass das Steuersignal selbst für die genannte Mindesthaltedauer erzeugt wird, oder dass der Aktuator der Kupplung für die genannte Mindesthaltedauer wirksam ist. Das nach dem erfindungsgemäßen Verfahren erzeugte Steuersignal muss allerdings nicht unmittelbar zu einer Betätigung der Kupplung führen, sondern hierfür können auch noch weitere Bedingungen berücksichtigt werden, beispielsweise eine hinreichend geringe Drehzahldifferenz an den beiden Teilen der Kupplung, die Fahrgeschwindigkeit, ein momentaner Querbeschleunigungswert, ein momentaner Steigungswert des Fahrzeugs, ein Zustandsparameter des Aktuators (z.B. Druck) oder dergleichen.

Alternativ zu einem derartigen selbsttätigen Öffnen der Kupplung kann auch ein aktives Öffnen der Kupplung vorgesehen sein. Hierfür ist es bevorzugt, dass der momentane Schlupfsummenwert auch mit einem weiteren, unteren Schlupfsummen-Schwellenwert verglichen wird, wobei ein Steuersignal zum Öffnen der Kupplung erzeugt wird, falls der momentane Schlupfsummenwert den weiteren Schlupfsummen-Schwellenwert unterschreitet.

Vorstehend wurde das erfindungsgemäße Steuerverfahren für eine einzige Kupplung erläutert. Besonders vorteilhafte Anwendung findet das Steuerverfahren jedoch in dem Antriebsstrang eines Kraftfahrzeugs mit mehreren Kupplungen, insbesondere mit mehreren formschlüssig wirksamen Kupplungen einer jeweiligen Differentialsperre, wobei für einige oder sämtliche der mehreren Kupplungen die vorstehend erläuterten Verfahrensschritte durchgeführt werden. Hierbei können zumindest einige der mehreren Kupplungen im Wesentlichen unabhängig voneinander gesteuert werden, wobei eine hohe Flexibilität hinsichtlich der Festlegung derjenigen Kupplung besteht, die aufgrund der momentanen Traktionserfordernissen zuerst geschaltet werden soll. Somit wird eine fest vorgegebene, rein hierarchische Schaltreihenfolge vermieden, wie dies beispielsweise aus dem eingangs genannten Dokument EP 0 644 077 B1 bekannt ist.

Hierfür ist es bevorzugt, wenn für das Steuern der mehreren Kupplungen unterschiedliche Schwellenwerte, unterschiedliche Gewichtungsfaktoren und/oder unterschiedliche Mindesthaltedauern verwendet werden. Somit kann eine bedarfsgerechte variable Reihenfolge der Betätigung der Kupplungen eingestellt werden.

Bei einem Geländefahrzeug umfassen die genannten mehreren Kupplungen vorzugsweise wenigstens eine Kupplung einer Zwischenachs-Differentialsperre und wenigstens zwei Kupplungen einer jeweiligen Achs-Differentialsperre (Vorderachs-Differentialsperre und Hinterachs-Differentialsperre). Gemäß einer vorteilhaften Ausführungsform wird das vorstehend erläuterte Steuerverfahren lediglich für die Kupplungen der Achs-Differentialsperren durchgeführt, während das Steuerverfahren für die Kupplung der Zwischenachs-Differentialsperre gemäß einer Maximalwert-Betrachtung modifiziert wird. Hierdurch kann erreicht werden, dass die Zwischenachs-Differentialsperre meist vor den Achs-Differentialsperren geschlossen wird, was aufgrund der Fahrdynamik prinzipiell sinnvoll ist.

Hierfür können in der jeweiligen Berechnungsschleife für die Kupplung der Zwischenachs-Differentialsperre insbesondere die folgenden Schritte durchgeführt werden:
- Ermitteln wenigstens eines Schlupfwerts, der einen momentanen Schlupf zwischen verschiedenen Achsen des Kraftfahrzeugs repräsentiert;
- Bilden eines Absolutwerts des Schlupfwerts, der dem Betrag des Schlupfwerts entspricht;
- Auswählen eines Maximalwerts aus den in der jeweiligen Berechnungsschleife für eine Gruppe von Kupplungen gebildeten Absolutwerten oder hieraus abgeleiteten Ersatzwerten;
- Aufsummieren des Maximalwerts oder eines hieraus abgeleiteten Ersatzwerts auf einen zuletzt gebildeten Maximal-Schlupfsummenwert, um für die Kupplung der Zwischenachs-Differentialsperre einen momentanen Maximal-Schlupfsummenwert zu bilden;
- Vergleichen des momentanen Maximal-Schlupfsummenwerts mit einem Maximal-Schlupfsummen-Schwellenwert; und
- Erzeugen eines Steuersignals zum Betätigen der Kupplung der Zwischenachs-Differentialsperre, falls der momentane Maximal-Schlupfsummenwert den Maximal-Schlupfsummen-Schwellenwert erreicht oder überschreitet.

Ein wesentlicher Unterschied zu dem Steuerverfahren für die Kupplungen der Achs-Differentialsperren besteht hierbei darin, dass ein so genannter Maximalwert auf einen zuletzt gebildeten so genannten Maximal-Schlupfsummenwert aufsummiert wird, wobei der hierdurch gebildete momentane Maximal-Schlupfsummenwert mit einem so genannten Maximal-Schlupfsummen-Schwellenwert verglichen wird. Als Maximalwert wird hierfür der betragsmäßig größte Wert verwendet, der innerhalb der jeweiligen Berechnungsschleife für eine Gruppe von Kupplungen als jeweiliger Absolutwert oder hieraus abgeleiteter Ersatzwert gebildet worden ist. Diese Gruppe von Kupplungen kann lediglich einige oder sämtliche der mehreren Kupplungen des Antriebsstrangs umfassen, insbesondere sämtliche Kupplungen der Achs-Differentialsperren sowie auch die betroffene Kupplung der betrachteten Zwischenachs-Differentialsperre.

Mit anderen Worten wird für diese Kupplungen der jeweilige Absolutwert oder Ersatzwert gebildet, und aus diesen Absolutwerten oder Ersatzwerten wird der größte Wert (als der so genannte Maximalwert) ausgewählt. Anhand der für die aufeinander folgenden Berechnungsschleifen ausgewählten Maximalwerte wird dann ein Maximal-Schlupfsummenwert gebildet, der mit dem Maximal-Schlupfsummenschwellenwert verglichen wird. Dies führt letztlich zu einem Ansteuern der Kupplung der Zwischenachs-Differentialsperre, falls an irgendeiner Kupplung ein hinreichend großer Schlupf detektiert wird, also beispielsweise auch an den Kupplungen der Vorderachs-Differentialsperre und Hinterachs-Differentialsperre, selbst wenn zwischen den Achsen kein oder kein besonders großer Schlupf ermittelt wird.

Das erläuterte Auswählen und Berücksichtigen eines jeweiligen Maximalwerts für die Kupplung der betrachteten Zwischenachs-Differentialsperre erfolgt vorzugsweise alternativ zu dem Bilden und Vergleichen eines Schlupfsummenwerts anhand der Absolutwerte lediglich der betroffenen Kupplung der betrachteten Zwischenachs-Differentialsperre. Mit anderen Worten wird für diese Kupplung lediglich das erläuterte alternative Steuerverfahren (Berücksichtigung von Maximalwerten) angewandt.

Falls der Antriebsstrang mehrere Zwischenachs-Differentialsperren aufweist, kann das erläuterte alternative Steuerverfahren (Berücksichtigung von Maximalwerten) für die Kupplungen sämtlicher Zwischenachs-Differentialsperren durchgeführt werden. Vorzugsweise wird das erläuterte alternative Steuerverfahren jedoch lediglich für eine der mehreren Zwischenachs-Differentialsperren durchgeführt, insbesondere für eine oder die hintere Zwischenachs-Differentialsperre.

Das genannte Auswählen des Maximalwerts erfolgt in der jeweiligen Berechnungsschleife vorzugsweise erst dann, nachdem geprüft worden ist, ob die in der jeweiligen Berechnungsschleife für die verschiedenen Kupplungen gebildeten Absolutwerte durch einen jeweiligen Ersatzwert ersetzt werden sollen und nachdem zutreffendenfalls der jeweilige Absolutwert durch den betreffenden Ersatzwert ersetzt worden ist. Mit anderen Worten wird der Maximalwert erst dann ausgewählt, nachdem die für die verschiedenen Kupplungen individuellen vorgesehenen Filterungen und Schwellenwert-Vergleiche bereits durchgeführt worden sind. Insbesondere kann für jede der Kupplungen zunächst der jeweilige Absolutwert mit einem Schlupfansprech-Schwellenwert verglichen werden. Ferner kann vor dem Auswählen des Maximalwerts für jede Kupplung geprüft und berücksichtigt werden, ob eine Schlupfschwingung oder eine Schlupfzunahme vorliegt (Multiplikation mit einem entsprechenden Gewichtungsfaktor).

Der für die Kupplung der betrachteten Zwischenachs-Differentialsperre ausgewählte Maximalwert kann in entsprechender Weise weiterverarbeitet werden, wie dies vorstehend bereits für die Absolutwerte des generellen Steuerverfahrens erläutert wurde, insbesondere durch Ersetzen des ausgewählten Maximalwerts durch einen geeigneten Ersatzwert. Beispielsweise kann auch der ausgewählte Maximalwert mit einem Schlupfansprech-Schwellenwert verglichen werden, um den ausgewählten Maximalwert gegebenenfalls durch einen Ersatzwert zu ersetzen, der geringer ist als der ausgewählte Ersatzwert oder den Wert Null besitzt. Ferner kann der ausgewählte Maximalwert mit einem Schlupfreduzierungs-Schwellenwert verglichen werden und gegebenenfalls durch einen Ersatzwert mit negativem Vorzeichen ersetzt werden.

Auch der gebildete momentane Maximal-Schlupfsummenwert kann in entsprechender Weise modifiziert werden, wie vorstehend für den Schlupfsummenwert des generellen Steuerverfahrens erläutert. Beispielsweise kann der momentane Maximal-Schlupfsummenwert auf den Wert des Maximal-Schlupfsummen-Schwellenwerts (als Obergrenze) oder auf den Wert Null (als Untergrenze) begrenzt werden.

Das erfindungsgemäße Steuerverfahren ermöglicht das Ansteuern mehrerer Kupplungen in einem Antriebsstrang, wie erläutert, in einer flexibel festlegbaren Reihenfolge. Durch das Auswählen und Berücksichtigung von Maximalwerten kann eine bevorzugten Betätigung einer Kupplung einer Zwischenachs-Differentialsperre vorgegeben werden. Falls eine bestimmte Schaltreihenfolge für einige oder sämtliche der mehreren Kupplungen stets zwingend eingehalten werden soll (beispielsweise aus Sicherheitsaspekten), kann alternativ oder zusätzlich zu den erläuterten steuerungstechnischen Maßnahmen eine mechanische, hydraulische, pneumatische oder elektrische Kopplung zwischen den betreffenden Kupplungen oder deren Aktuatorik vorgesehen sein.

Die Erfindung wird nachfolgend lediglich beispielhaft unter Bezugnahme auf die Zeichnungen erläutert.
- Fig. 1: zeigt eine schematische Darstellung eines Antriebsstrangs eines Kraftfahrzeugs.
- Fig. 2: zeigt ein Zeitschaubild, welches beispielhaft den Verlauf der Steuerung einer einzelnen Kupplung darstellt.
- Fig. 3: zeigt ein Zeitschaubild, welches beispielhaft den Verlauf einer Steuerung von mehreren Kupplungen darstellt.

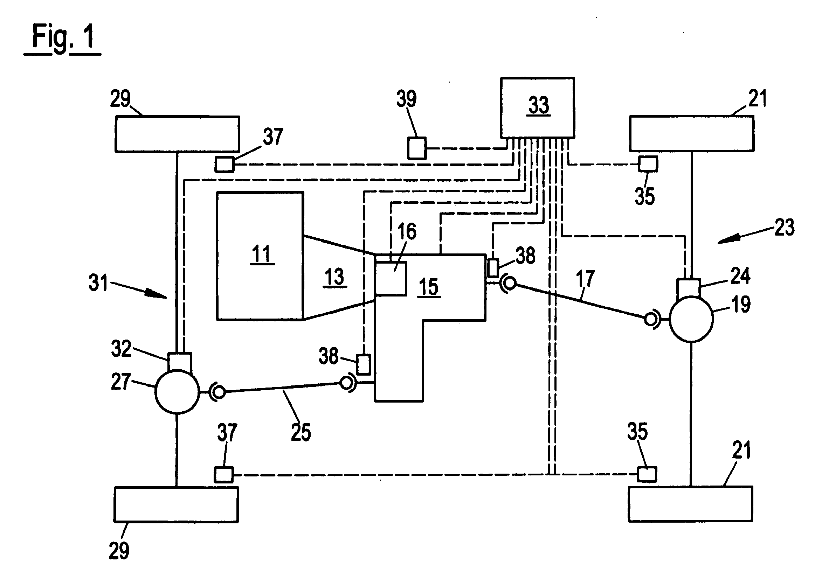

Fig. 1 zeigt schematisch einen Antriebsstrang eines zweiachsigen geländegängigen Kraftfahrzeugs mit permanentem Allradantrieb (4 x 4). Das von einem Verbrennungsmotor 11 erzeugte Antriebsmoment wird über ein Hauptgetriebe 13 (manuelles Schaltgetriebe oder Automatikgetriebe) einem Zwischenachs-Differentialgetriebe 15 zugeführt. Das Zwischenachs-Differentialgetriebe 15 umfasst eine Kupplung 16, um das Zwischenachs-Differentialgetriebe 15 wahlweise zu sperren. Ein erster Ausgang des Zwischenachs-Differentialgetriebes 15 ist über eine Kardanwelle 17 mit einem Hinterachs-Differentialgetriebe 19 gekoppelt. Über dieses werden die Räder 21 der Hinterachse 23 angetrieben. Dem Hinterachs-Differentialgetriebe 19 ist eine Kupplung 24 zugeordnet, um das Hinterachs-Differentialgetriebe 19 wahlweise zu sperren. Ein zweiter Ausgang des Zwischenachs-Differentialgetriebes 15 ist über eine Kardanwelle 25 mit einem Vorderachse-Differentialgetriebe 27 gekoppelt. Hierüber wird ein Teil des Antriebsmoments auf die Räder 29 der Vorderachse 31 übertragen. Dem Vorderachse-Differentialgetriebe 27 ist eine Kupplung 32 zugeordnet, um das Vorderachse-Differentialgetriebe 27 wahlweise zu sperren. Bei den Kupplungen 16, 24, 32 handelt es sich um formschlüssig oder reibschlüssig wirksame Kupplungen.

Ferner ist in Fig. 1 eine Steuereinrichtung 33 gezeigt. Diese ist mit Raddrehzahl-Sensoren 35, 37 verbunden, die den Rädern 21 der Hinterachse 23 bzw. den Rädern 29 der Vorderachse 31 zugeordnet sind. Die Steuereinrichtung 33 ist ferner mit Wellendrehzahl-Sensoren 38 zur Erzeugung von Signalen verbunden, welche die jeweilige Drehzahl der beiden Ausgänge des Zwischenachs-Differentialgetriebes 15, d.h. der Kardanwelle 17 und der Kardanwelle 25 repräsentieren. Die Steuereinrichtung 33 ist mit weiteren Sensoren 39 verbunden, beispielsweise einem Lenkwinkelsensor, einem Neigungssensor, einem Gierraten-Sensor und dergleichen. In Abhängigkeit von den Signalen der Sensoren 35, 37, 38, 39 erzeugt die Steuereinrichtung 33 Steuersignale zum Betätigen der Kupplungen 16, 24, 32, um hierdurch eines oder mehrere der Differentialgetriebe 15, 19, 27 zu sperren. Die Wellendrehzahl-Sensoren 38 sind nicht zwingend erforderlich, um Wellendrehzahl-Signale für die beiden Ausgänge 17, 25 des Zwischenachs-Differentialgetriebes 15 zu bilden. Stattdessen können diese Wellendrehzahl-Signale auch aus den Signalen der Raddrehzahl-Sensoren 35, 37 der jeweiligen Achse 23, 31 abgeleitet werden.

Die Steuereinrichtung 33 kann anstelle der gezeigten zentralen Anordnung auch drei separate Einheiten umfassen, die jeweils einer der Kupplungen 16, 24, 32 zugeordnet sind und in geeigneter Weise in Signalverbindung miteinander stehen.

Abweichend von der Darstellung gemäß Fig. 1 kann das Kraftfahrzeug auch mehr als zwei Achsen besitzen, beispielsweise drei Achsen, von denen zwei Achsen (6 x 4) oder drei Achsen (6 x 6) angetrieben sind. In dem letztgenannten Fall wären zwei sperrbare Zwischenachs-Differentialgetriebe und drei sperrbare Achs-Differentialgetriebe vorhanden.

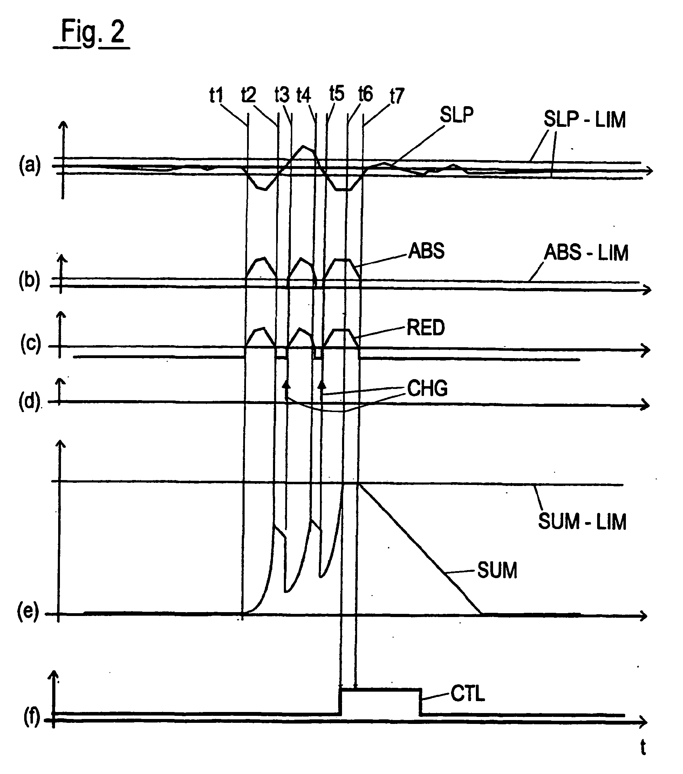

Fig. 2 zeigt ein Zeitschaubild zur Verdeutlichung eines beispielhaften Steuerverfahrens für eine der Kupplungen 16, 24, 32 des Antriebsstrangs gemäß Fig. 1. Die Diagramme (a) bis (f) gemäß Fig. 2 zeigen auf der Abszisse dieselbe Zeit t.

Diagramm (a) zeigt den zeitlichen Verlauf eines Schlupfwerts SLP der Kupplung. Falls es sich um die Kupplung 16 des Zwischenachs-Differentialgetriebes 15 gemäß Fig. 1 handelt, so kann der Schlupfwert SLP aus einer Differenz der Signale der beiden Wellendrehzahl-Sensoren 38 an den Ausgängen des Zwischenachs-Differentialgetriebes 15 oder aus den Signalen der Raddrehzahl-Sensoren 35, 37 ermittelt werden, wobei zusätzliche Parameter berücksichtigt und Korrekturen durchgeführt werden können (z.B. Berücksichtigung eines Lenkwinkelsignals). Falls es sich um die Kupplung 24 des Hinterachs-Differentialgetriebes 19 gemäß Fig. 1 handelt, so kann der Schlupfwert aus den Signalen der beiden Raddrehzahl-Sensoren 35 der Hinterachse 23 ermittelt werden, wobei auch hier zusätzliche Parameter berücksichtigt und Korrekturen durchgeführt werden können. Der in Diagramm (a) gemäß Fig. 2 gezeigte Schlupfwert SLP repräsentiert einen momentanen voreilenden Schlupf (positive Werte) und einen momentanen nacheilenden Schlupf (negative Werte). Zusätzlich ist in dem Diagramm (a) ein Schlupfansprech-Schwellenwert SLP-LIM gezeigt, der hier sowohl auf der positiven als auch auf der negativen Seite aufgetragen ist, wobei der positive Schwellenwert und der negative Schwellenwert betragsmäßig gleich groß sind.

Während des Betriebs der Steuereinrichtung 33 gemäß Fig. 1 werden die ermittelten Schlupfwerte SLP in sich wiederholenden Berechnungsschleifen ständig weiter verarbeitet und ausgewertet. Bei ausreichend hoher Abtast- und Taktfrequenz erscheinen die hieraus gebildeten Werte als kontinuierlicher Verlauf, wie in Fig. 2 dargestellt.

Zunächst wird der ermittelte jeweilige Schlupfwert SLP in einen Absolutwert umgewandelt, d.h. negative Schlupfwerte werden mit einem positiven Vorzeichen versehen. Der jeweilige Absolutwert des Schlupfwerts SLP wird dann mit dem oberen Schlupfansprech-Schwellenwert SLP-LIM gemäß Diagramm (a) verglichen, um einen ersten Ersatzwert ABS zu bilden. Falls der jeweilige Absolutwert kleiner ist als der obere Schlupfansprech-Schwellenwert SLP-LIM, wird der erste Ersatzwert ABS auf den Wert Null gesetzt. Andernfalls erhält der erste Ersatzwert ABS den Wert des Absolutwerts (alternativ könnte der Absolutwert in diesem Fall auch um einen Schlupfreduzierungswert verringert werden). Es versteht sich, dass für den genannten Vergleich auch in umgekehrter Reihenfolge vorgegangen werden könnte, d.h. erst wird der (positive oder negative) Schlupfwert SLP mit dem oberen und unteren Schlupfansprech-Schwellenwert SLP-LIM gemäß Diagramm (a) verglichen, um den Schlupfwert SLP gegebenenfalls auf den Wert Null zu setzen, und danach wird erst der Absolutwert gebildet.

Der somit gebildete erste Ersatzwert ABS ist in Diagramm (b) gezeigt, wobei gegenüber der Darstellung gemäß Diagramm (a) der erste Ersatzwert ABS entlang der Ordinate vergrößert gezeigt ist. Es ist zu erkennen, dass vor dem Zeitpunkt t1 der erste Ersatzwert ABS den Wert Null annimmt.

Zu dem Zeitpunkt t1 unterschreitet der Schlupfwert SLP den unteren Schlupfansprech-Schwellenwert SLP-LIM gemäß Diagramm (a), d.h. der Absolutwert des Schlupfwerts überschreitet den oberen Schlupfansprech-Schwellenwert. Demzufolge sind in dem Diagramm (b) ein Sprung des ersten Ersatzwerts ABS auf einen positiven Wert entsprechend dem Schlupfansprech-Schwellenwert SLP-LIM und ein nachfolgendes Ansteigen und späteres Abfallen des ersten Ersatzwerts ABS zu erkennen. Zu dem Zeitpunkt t2 unterschreitet der Schlupfwert SLP gemäß Diagramm (a) betragsmäßig wieder den Schlupfansprech-Schwellenwert SLP-LIM, was für den ersten Ersatzwert ABS gemäß Diagramm (b) bedeutet, dass dieser erneut den Wert Null annimmt. Ein derartiger Verlauf des ersten Ersatzwerts ABS wiederholt sich in dem Zeitintervall t3 bis t4 und erneut in dem Zeitintervall t5 bis t7.

Der erste Ersatzwert ABS gemäß Diagramm (b) wird sodann um einen Schlupfreduzierungswert verringert, um einen zweiten Ersatzwert RED zu bilden, welcher in Diagramm (c) gezeigt ist. Der genannte Schlupfreduzierungswert ist im Verhältnis zu dem Schlupfansprech-Schwellenwert SLP-LIM gemäß dem Diagramm (a) derart gewählt, dass die zweiten Ersatzwerte RED fallweise positiv oder negativ sind. Bei dem hier gezeigten Ausführungsbeispiel ist der genannte Schlupfreduzierungswert der Einfachheit halber betragsgemäß genauso groß wie der Schlupfansprech-Schwellenwert SLP-LIM gewählt.

Um auf besonders einfache Weise zu dem zweiten Ersatzwert RED gemäß Diagramm (c) zu gelangen, könnte der Vergleich des jeweiligen Absolutwerts mit dem Schlupfansprech-Schwellenwert SLP-LIM gemäß Diagramm (a) alternativ auch derart durchgeführt werden, dass der Absolutwert durch einen negativen Ersatzwert RED ersetzt wird, falls der Absolutwert kleiner ist als der obere Schlupfansprech-Schwellenwert SLP-LIM, und dass der Absolutwert durch einen Ersatzwert RED ersetzt wird, der einer Differenz zwischen dem Absolutwert und dem Schlupfansprech-Schwellenwert SLP-LIM entspricht, falls der Absolutwert größer ist als der obere Schlupfansprech-Schwellenwert SLP-LIM. Hierdurch würde also der Zwischenschritt des Bildens des ersten Ersatzwerts ABS gemäß Diagramm (b) entfallen.

An dieser Stelle ist anzumerken, dass alternativ auch wie folgt vorgegangen werden könnte: Der erste Ersatzwert ABS gemäß Diagramm (b) könnte mit einem Schlupfreduzierungs-Schwellenwert ABS-LIM verglichen werden. Falls der erste Ersatzwert ABS kleiner ist als der Schlupfreduzierungs-Schwellenwert ABS-LIM, wird der erste Ersatzwert ABS durch einen negativen zweiten Ersatzwert RED ersetzt. Andernfalls nimmt der zweite Ersatzwert RED den (positiven) Wert des ersten Ersatzwerts ABS an, oder der zweite Ersatzwert RED nimmt die Differenz zwischen dem ersten Ersatzwert ABS und dem Schlupfreduzierungs-Schwellenwert ABS-LIM an. Bei dieser alternativen Vorgehensweise ist zwar ein zusätzlicher Schwellenwertvergleich erforderlich. Allerdings ist eine bessere Anpassung der negativen zweiten Ersatzwerte RED an die jeweilige Fahrsituation möglich, insbesondere falls der Schlupfansprech-Schwellenwert SLP-LIM und der Schlupfreduzierungs-Schwellenwert ABS-LIM unterschiedlich gewählt werden.

Ausgehend von dem (positiven und negativen) Schlupfwert SLP gemäß Diagramm (a) kann zusätzlich das Vorliegen einer Schlupfschwingung geprüft werden. Hierfür wird gemäß einer besonders einfachen Ausführungsform überwacht, ob die ermittelten Schlupfwerte SLP das Vorzeichen wechseln, wobei allerdings lediglich solche Schlupfwerte SLP berücksichtigt werden, die betragsmäßig einen Ansprechschwellenwert überschreiten, insbesondere den ohnehin gemäß Diagramm (a) berücksichtigten Schlupfansprech-Schwellenwert SLP-LIM.

Dies ist in Diagramm (d) illustriert. Zunächst kann ein Schalter beispielsweise auf den Wert 0 gesetzt werden, um anzuzeigen, dass keine definierte Schlupfrichtung vorliegt. Sobald in dem Zeitintervall t1 bis t2 negative Schlupfwerte SLP festgestellt werden, welche den Schlupfansprech-Schwellenwert SLP-LIM betragsmäßig übersteigen, wird der Schalter auf den Wert -1 gesetzt, entsprechend einem nacheilenden Schlupf. Sobald innerhalb einer vorbestimmten Anzahl von Berechnungsschleifen positive Schlupfwerte SLP festgestellt werden, wird der Schalter auf den Wert + 1 gesetzt, entsprechend einem voreilenden Schlupf. Für jeden Vorzeichenwechsel (also von -1 auf +1 oder von +1 auf -1) wird ein Marker CHG gesetzt. Dies ist in dem Diagramm (d) erstmalig zu einem Zeitpunkt t3 der Fall, und später zu dem Zeitpunkt t5. Falls jedoch innerhalb der vorbestimmten Anzahl von Berechnungsschleifen kein definierter Schlupf (betragsmäßiges Überschreiten des Schlupfansprech-Schwellenwerts SLP-LIM) festgestellt wird, wird der Schalter wieder auf den Wert 0 zurückgesetzt, so dass ein nachfolgendes Feststellen eines definierten Schlupfs nicht als Vorzeichenwechsel gewertet wird (d.h. kein Marker CHG).

Die vorstehend erläuterten Marker CHG für eine Schlupfschwingung werden bei dem nachfolgend erläuterten Ausführungsbeispiel für ein Modifizieren eines Schlupfsummenwerts verwendet. Alternativ oder zusätzlich kann bei Vorliegen einer Schlupfschwingung der gebildete Ersatzwert RED gemäß dem Diagramm (c) modifiziert werden, beispielsweise durch Multiplikation mit einem Gewichtungsfaktor. Unabhängig von dem Vorliegen einer Schlupfschwingung kann der jeweilige Ersatzwert RED auch mit einem Gewichtungsfaktor multipliziert werden, der von anderen Fahrzustandsparametern abhängt, beispielsweise von einem Schlupfzunahmewert.

Die gemäß dem Diagramm (c) gebildeten zweiten Ersatzwerte RED werden zu einem momentanen Schlupfsummenwert SUM aufsummiert, der in Diagramm (e) gemäß Fig. 2 gezeigt ist. Dies bedeutet, dass der jeweilige zweite Ersatzwert RED auf einen zuletzt gebildeten Schlupfsummenwert aufsummiert wird, um den momentanen Schlupfsummenwert SUM zu bilden. Es versteht sich, dass dieser momentane Schlupfsummenwert SUM in der nächsten Berechnungsschleife wiederum den genannten zuletzt gebildeten Schlupfsummenwert bildet.

Ausgehend von einem Anfangswert Null zu dem Zeitpunkt t1 führt dies in dem Zeitintervall t1 bis t2 zu einem Ansteigen des Schlupfsummenwerts SUM. In dem Zeitintervall t2 bis t3, in dem die Schlupfwerte SLP gemäß Diagramm (a) betragsmäßig unterhalb des Schlupfansprech-Schwellenwerts SLP-LIM liegen, fällt der Schlupfsummenwert SUM wieder ab, nämlich aufgrund der negativen zweiten Ersatzwerte RED. Zu dem Zeitpunkt t3 ist der Marker CHG gemäß Diagramm (d) gesetzt, der einen Vorzeichenwechsel des Schlupfwerts SLP und somit eine Schlupfschwingung repräsentiert. Der Marker CHG löst eine Verringerung des momentanen Schlupfsummenwerts SUM aus. Hierfür wird der momentane Schlupfsummenwert SUM mit einem Gewichtungsfaktor multipliziert, der einen positiven Wert kleiner Eins besitzt. Das weitere Aufsummieren in dem Zeitintervall t3 bis t4 erfolgt also ausgehend von einem deutlich verringerten Schlupfsummenwert SUM. In dem Zeitintervall t4 bis t5 erfolgt neuerlich eine stetige Verringerung des momentanen Schlupfsummenwerts SUM (negative zweite Ersatzwerte RED). Zu dem Zeitpunkt t5 ist wieder ein Marker CHG für das Vorliegen einer Schlupfschwingung gesetzt, und der momentane Schlupfsummenwert SUM wird wieder verringert. In dem nachfolgenden Zeitintervall t5 bis t6 steigt der momentane Schlupfsummenwert SUM wieder stetig an.

Zu dem Zeitpunkt t6 wird gemäß Diagramm (e) allerdings ein Schlupfsummen-Schwellenwert SUM-LIM erreicht. Dies hat zweierlei Auswirkungen. Zum einen wird während einer vorbestimmten Mindesthaltedauer ein Steuersignal CTL für die Kupplung erzeugt, um die Kupplung zu schließen, wie in Diagramm (f) gezeigt ist. Zum anderen wird der momentane Schlupfsummenwert SUM nach oben auf den Schlupfsummen-Schwellenwert SUM-LIM begrenzt, obwohl in dem Zeitintervall t6 bis t7 die zweiten Ersatzwerte RED größer Null sind. Dies hat zur Folge, dass ab dem Zeitpunkt t7, wenn die zweiten Ersatzwerte RED wieder negativ sind, der momentane Schlupfsummenwert SUM gemäß Diagramm (e) ausgehend von dem Schlupfsummen-Schwellenwert SUM-LIM (und nicht etwa einem höheren Wert) kontinuierlich abfällt. Sobald jedoch der momentane Schlupfsummenwert SUM den Wert Null erreicht, wird der momentane Schlupfsummenwert SUM nach unten auf den Wert Null begrenzt, selbst wenn weiterhin negative zweite Ersatzwerte RED gebildet werden. Mit anderen Worten kann der momentane Schlupfsummenwert SUM lediglich Werte zwischen Null und dem Schlupfsummen-Schwellenwert SUM-LIM annehmen.

Das anhand Fig. 2 erläuterte Steuerverfahren zeichnet sich dadurch aus, dass die erforderlichen Berechnungen und Schwellenwertvergleiche besonders einfach und schnell durchgeführt werden können und somit auch geringe Anforderungen an die zugeordnete Steuereinrichtung 33 gemäß Fig. 1 stellen (geringe Rechenkapazität, geringer Speicherbedarf). Abgesehen von der Bildung der Marker CHG können die Auswertung und Weiterverarbeitung der Schlupfwerte SLP nämlich ausschließlich anhand von Absolutwerten erfolgen, d.h. es müssen keine Berechnungen für negative Schlupfwerte und positive Schlupfwerte separat voneinander durchgeführt werden. Eine schnelle Erzeugung des Steuersignals CTL ist insbesondere dann wichtig, wenn es sich bei der Kupplung um eine Sperre für ein Differentialgetriebe 15, 19, 27 handelt, da andernfalls die Gefahr besteht, dass aufgrund der entstehenden Drehzahldifferenz die betreffende Kupplung 16, 24, 28 nicht mehr geschaltet werden kann (im Falle einer formschlüssig wirksamen Kupplung) oder die thermische Beanspruchung zu groß wird (im Falle einer reibschlüssig wirksamen Kupplung).

Durch die Verwendung von vorbestimmten negativen Ersatzwerten (negative Werte des zweiten Ersatzwerts RED) kann die Rückbildung des Schlupfsummenwerts SUM bedarfsgerecht vorgenommen und insbesondere in Abhängigkeit von der momentanen Fahrsituation ausgestaltet werden. Insbesondere kann bei lediglich langsam abnehmendem Schlupf ein unerwünschtes Schaltpendeln verhindert werden, da durch die vorbestimmten negativen Ersatzwerte eine schnellere Verringerung des momentanen Schlupfsummenwerts SUM erzielt werden kann als dies bei Verwendung der tatsächlichen Schlupfwerte SLP der Fall wäre. Da für den momentanen Schlupfsummenwert SUM ferner eine Untergrenze (Null) und eine Obergrenze (SUM-LIM) gesetzt wird, ergeben sich auch definierte Anfangswerte für das Bilden des Schlupfsummenwerts SUM, so dass das Erzeugen des Steuersignals CTL nicht von einer übermäßig weit zurückreichenden Historie der Schlupfwerte SLP abhängt.

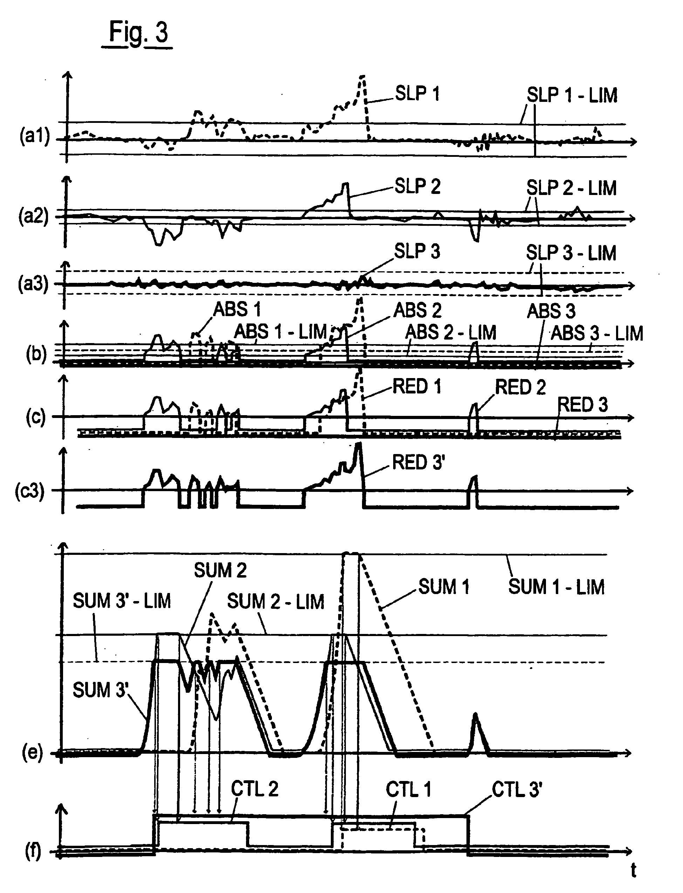

Fig. 3 zeigt ein Zeitschaubild, das die Anwendung des Steuerverfahrens gemäß Fig. 2 auf die drei Kupplungen 16, 24, 32 des 4 x 4 allradgetriebenen Geländefahrzeugs gemäß Fig. 1 illustriert. Für jede der beiden Kupplungen 24, 32 der beiden Achs-Differentialgetriebe 19, 27 wird dabei analog dem Steuerverfahren gemäß Fig. 2 verfahren, wobei in dem gezeigten Ausführungsbeispiel auf das Setzen von Markern CHG bei Detektion einer Schlupfschwingung gemäß Diagramm (d) nach Fig. 2 verzichtet wird. Für die Kupplung 16 des Zwischenachs-Differentialgetriebes 15 ist das Steuerverfahren jedoch modifiziert.

In den Diagrammen (a1), (a2) und (a3) gemäß Fig. 3 ist der jeweilige Schlupfwert SLP1, SLP2 und SLP3 der Kupplung 32 des Vorderachs-Differentialgetriebes 27 bzw. der Kupplung 24 des Hinterachs-Differentialgetriebes 19 bzw. der Kupplung 16 des Zwischenachs-Differentialgetriebes 15 gezeigt. Ebenso ist in diesen Diagrammen der jeweilige Schlupfansprech-Schwellenwert SLP1-LIM bzw. SLP2-LIM bzw. SLP3-LIM dargestellt. Wie bereits im Zusammenhang mit Fig. 2 erläutert, wird der jeweilige Schlupfwert in einen Absolutwert umgewandelt und mit dem jeweiligen Schlupfansprech-Schwellenwert verglichen, wobei im Falle des betragsmäßigen Unterschreitens der Absolutwert durch den Wert Null ersetzt wird. Die hieraus für die drei Kupplungen 32, 24 und 16 resultierenden ersten Ersatzwerte ABS1 bzw. ABS2 bzw. ABS3 sind gemeinsam in Diagramm (b) gemäß Fig. 3 gezeigt. Der erste Ersatzwert ABS3 der Kupplung 16 des Zwischenachs-Differentialgetriebes 15 besitzt bei diesem Ausführungsbeispiel durchgehend den Wert Null, da die zugrunde liegenden Schlupfwerte SLP3 den zugeordneten Schlupfansprech-Schwellenwert SLP3-LIM zu keinem Zeitpunkt betragsmäßig übersteigen, wie in Diagramm (a3) gezeigt ist.

Analog zu dem Steuerverfahren gemäß Fig. 2 wird der jeweilige erste Ersatzwert ABS1, ABS2, ABS3 um einen Schlupfreduzierungswert verringert, der betragsmäßig einem jeweiligen Schlupfreduzierungs-Schwellenwert ABS1-LIM bzw. ABS2-LIM bzw. ABS3-LIM entspricht. Der jeweilige Schlupfreduzierungswert bzw. Schlupfreduzierungs-Schwellenwert ABS1-LIM, ABS2-LIM, ABS3-LIM ist der Einfachheit halber hier wieder genauso groß gewählt wie der jeweilige Schlupfansprech-Schwellenwert SLP1-LIM bzw. SLP2-LIM bzw. SLP3-LIM gemäß den Diagrammen (a1) bis (a3). Hierdurch wird ein jeweiliger zweiter Ersatzwert RED1 bzw. RED2 bzw. RED3 gebildet, wie in Diagramm (c) gemäß Fig. 3 gezeigt ist.

Unter fahrdynamischen Gesichtspunkten erzielt das Sperren eines Zwischenachs-Differentialgetriebes oftmals die größte Wirkung hinsichtlich der Traktion bei geringster negativer Beeinflussung des Fahrverhaltens. Es ist deshalb bevorzugt, dass die Kupplung 16 des Zwischenachs-Differentialgetriebes 15 gemäß Fig. 1 vor den Kupplungen 24, 32 der beiden Achs-Differentialgetriebe 19, 27 geschlossen wird, selbst wenn an dem Zwischenachs-Differentialgetriebe 15 noch keine signifikante Drehzahldifferenz detektiert wird (durchgehender Wert Null von ABS3 in Diagramm (b)). Um dennoch die Kupplung 16 des Zwischenachs-Differentialgetriebes 15 rechtzeitig anzusteuern, ermittelt die Steuereinrichtung 33 gemäß Fig. 1 aus den drei zweiten Ersatzwerten RED1, RED2 und RED3 in der jeweiligen Berechnungsschleife einen Maximalwert RED3', d.h. den in der jeweiligen Berechnungsschleife gebildeten größten zweiten Ersatzwert RED 1, RED2 oder RED3. Dieser Maximalwert RED3' ist in dem Diagramm (c3) dargestellt. Hierbei wird der Maximalwert RED3' auf den negativen Schlupfreduzierungswert der Kupplung 16 des Zwischenachs-Differentialgetriebes 15 gesetzt, falls in der jeweiligen Berechnungsschleife für keine der Kupplungen 16, 24, 32 ein positiver Wert (Überschreiten des jeweiligen Schlupfansprech-Schwellenwerts) vorliegt.

Das Diagramm (e) gemäß Fig. 3 zeigt analog zu Fig. 2 den Schlupfsummenwert SUM1 der Kupplung 32 des Vorderachs-Differentialgetriebes 27, den Schlupfsummenwert SUM2 der Kupplung 24 des Hinterachs-Differentialgetriebes 19 und den Maximal-Schlupfsummenwert SUM3' der Kupplung 16 des Zwischenachs-Differentialgetriebes 15. Der jeweilige momentane Schlupfsummenwert wird für die Kupplungen 24, 32 auch hier durch Aufsummieren des jeweiligen zweiten Ersatzwerts RED1, RED2 auf dem zuletzt gebildeten Schlupfsummenwert gebildet. Für für das Bilden des momentanen Maximal-Schlupfsummenwerts SUM3' der Kupplung 16 des Zwischenachs-Differentialgetriebes 15 gemäß Fig. 1 wird jedoch der Maximalwert RED3' gemäß Diagramm (c3) verwendet, also nicht der zweite Ersatzwert RED3 gemäß Diagramm (c). Ferner ist in Diagramm (e) der jeweilige Schlupfsummen-Schwellenwert SUM1-LIM bzw. SUM2-LIM bzw. SUM3'-LIM gezeigt.

Für jeden Summenschwellenwert SUM1, SUM2, SUM3' wird in der jeweiligen Berechnungsschleife geprüft, ob der zugeordnete Schlupfsummen-Schwellenwert SUM1-LIM bzw. SUM2-LIM bzw. SUM3'-LIM überschritten wird, wobei zutreffendenfalls ein Steuersignal CTL1 bzw. CTL2 bzw. CTL3' für die jeweilige Kupplung 32, 24, 16 erzeugt wird, wie in Diagramm (f) gezeigt ist. Der jeweilige Schlupfsummenwert SUM1, SUM2, SUM3' wird hierbei stets nach unten auf den Wert Null und nach oben auf den Wert des jeweiligen Schlupfsummen-Schwellenwerts SUM1-LIM bzw. SUM2-LIM bzw. SUM3'-LIM begrenzt.

Es ist zu beachten, dass die verschiedenen Schlupfsummen-Schwellenwerte SUM1-LIM, SUM2-LIM, SUM3'-LIM unterschiedlich groß sind. Auch die Schaltsignale CTL1, CTL2, CTL3' besitzen eine unterschiedliche Dauer. Hierdurch kann jede der drei Kupplungen 32 bzw. 24 bzw. 16 individuell angesteuert werden, entsprechend den unterschiedlichen fahrdynamischen Auswirkungen des Sperrens des Vorderachs-Differentialgetriebes 27, des Hinterachs-Differentialgetriebes 19 und des Zwischenachs-Differentialgetriebes 15.

Das Steuern der Kupplung 16 des Zwischenachs-Differentialgetriebes 15 gemäß Fig. 1 auf Grundlage eines Maximalwerts RED3', der für jede Berechnungsschleife aus den modifizierten Absolutwerten der mehreren Kupplungen 16, 24, 32 des Antriebsstrangs ausgewählt wird, hat den besonderen Vorteil, dass die Kupplung des Zwischenachs-Differentialgetriebes 15 frühzeitig angesteuert wird, selbst wenn an den beiden Ausgangswellen 17, 25 des Zwischenachs-Differentialgetriebes 15 noch keine signifikante Drehzahldifferenz und dementsprechend kein signifikanter Schlupfsummenwert ermittelt werden kann.

### Bezugszeichenliste

- 11: Verbrennungsmotor
- 13: Hauptgetriebe
- 15: Zwischenachs-Differentialgetriebe
- 16: Kupplung
- 17: Kardanwelle
- 19: Hinterachs-Differentialgetriebe
- 21: Rad
- 23: Hinterachse
- 24: Kupplung
- 25: Kardanwelle
- 27: Vorderachs-Differentialgetriebe
- 29: Rad
- 31: Vorderachse
- 32: Kupplung
- 33: Steuereinrichtung
- 35: Raddrehzahl-Sensor
- 37: Raddrehzahl-Sensor
- 38: Wellendrehzahl-Sensor
- 39: weiterer Sensor

- SLP: Schlupfwert
- SLP-LIM: Schlupfansprech-Schwellenwert
- ABS: erster Ersatzwert
- ABS-LIM: Schlupfreduzierungs-Schwellenwert
- RED: zweiter Ersatzwert
- CHG: Marker für Schlupfschwingung
- SUM: momentaner Schlupfsummenwert
- SUM-LIM: Schlupfsummen-Schwellenwert
- CTL: Steuersignal
- t: Zeit

## Patentansprüche

1. Verfahren zum Steuern wenigstens einer Kupplung (16, 24, 32) in einem Antriebsstrang eines Kraftfahrzeugs, insbesondere zum Steuern wenigstens einer formschlüssig wirksamen Kupplung einer Differentialsperre eines Geländefahrzeugs,
bei dem in einer jeweiligen Berechnungsschleife zumindest die folgenden Schritte durchgeführt werden:
- Ermitteln wenigstens eines Schlupfwerts (SLP), der einen momentanen Schlupf zwischen verschiedenen Achsen (23, 31) des Kraftfahrzeugs oder zwischen verschiedenen Rädern (21, 29) einer Achse repräsentiert;
- Bilden eines Absolutwerts des Schlupfwerts (SLP), der dem Betrag des Schlupfwerts entspricht;
- Aufsummieren des Absolutwerts oder eines hieraus abgeleiteten Ersatzwerts (RED) auf einen zuletzt gebildeten Schlupfsummenwert, um einen momentanen Schlupfsummenwert (SUM) zu bilden;
- Vergleichen des momentanen Schlupfsummenwerts (SUM) mit einem Schlupfsummen-Schwellenwert (SUM-LIM); und
- Erzeugen eines Steuersignals (CTL) zum Betätigen der Kupplung (16, 24, 32), falls der momentane Schlupfsummenwert den Schlupfsummen-Schwellenwert erreicht oder überschreitet.

2. Verfahren nach Anspruch 1,
wobei geprüft wird, ob eine Schlupfschwingung vorliegt, wobei zutreffendenfalls der momentane Schlupfsummenwert (SUM), der zuletzt gebildete Schlupfsummenwert oder der Schlupfsummen-Schwellenwert (SUM-LIM) modifiziert wird;
wobei für das Modifizieren des momentanen oder des zuletzt gebildeten Schlupfsummenwerts (SUM) der Schlupfsummenwert vorzugsweise mit einem Gewichtungsfaktor multipliziert wird, der einen Wert zwischen Null und Eins besitzt, oder wobei für das Modifizieren des Schlupfsummen-Schwellenwerts (SUM-LIM) der Schlupfsummen-Schwellenwert vorzugsweise mit einem Gewichtungsfaktor größer Eins multipliziert wird.

3. Verfahren nach Anspruch 2,
wobei für die Prüfung, ob eine Schlupfschwingung vorliegt, überwacht wird, ob die ermittelten Schlupfwerte (SLP) innerhalb eines vorbestimmten Zeitraums oder innerhalb einer vorbestimmten Anzahl von Berechnungsschleifen wenigstens einmal das Vorzeichen wechseln, insbesondere unter Berücksichtigung eines positiven und eines negativen Ansprechschwellenwerts (SLP-LIM);
wobei vorzugsweise ein Schlupfschwingungs-Überwachungswert um einen vorbestimmten Wert erhöht wird, falls ein Vorzeichenwechsel der ermittelten Schlupfwerte festgestellt wird, wobei der Schlupfschwingungs-Überwachungswert um einen vorbestimmten Wert verringert wird, wenn ein vorbestimmtes Zeitintervall oder eine vorbestimmte Anzahl von Berechnungsschleifen verstrichen ist, und wobei das Vorliegen einer Schlupfschwingung festgestellt wird, falls der Schlupfschwingungs-Überwachungswert einen Schlupfschwingungs-Schwellenwert erreicht oder überschreitet.

4. Verfahren nach einem der vorhergehenden Ansprüche,
wobei bei einer erstmaligen Durchführung des Schritts des Aufsummierens der Absolutwert oder Ersatzwert (RED) auf einen vorbestimmten Anfangswert aufsummiert wird;
und/oder
wobei der Absolutwert des Schlupfwerts (SLP) mit einem Schlupfansprech-Schwellenwert (SLP-LIM) verglichen wird, wobei vor oder in dem Schritt des Aufsummierens der Absolutwert durch einen Ersatzwert (ABS) ersetzt wird, der den Wert Null oder einen negativen Wert besitzt, falls der Absolutwert kleiner ist als der Schlupfansprech-Schwellenwert (SLP-LIM), wobei der Ersatzwert vorzugsweise einer Differenz zwischen dem Absolutwert und dem Schlupfansprech-Schwellenwert entspricht, falls der Absolutwert größer ist als der Schlupfansprech-Schwellenwert.

5. Verfahren nach einem der vorhergehenden Ansprüche,
wobei vor oder in dem Schritt des Aufsummierens der Absolutwert des Schlupfwerts oder ein hieraus bereits abgeleiteter Ersatzwert (ABS) um einen Schlupfreduzierungswert verringert wird, um fallweise einen positiven oder negativen Ersatzwert (RED) zu bilden; oder
wobei der Absolutwert des Schlupfwerts oder ein hieraus bereits abgeleiteter Ersatzwert (ABS) mit einem Schlupfreduzierungs-Schwellenwert (ABS-LIM) verglichen wird, wobei vor oder in dem Schritt des Aufsummierens der Absolutwert oder der hieraus bereits abgeleitete Ersatzwert (ABS) durch einen Ersatzwert (RED) mit negativem Vorzeichen ersetzt wird, falls der Absolutwert oder der hieraus bereits abgeleitete Ersatzwert (ABS) den Schlupfreduzierungs-Schwellenwert (ABS-LIM) unterschreitet.

6. Verfahren nach einem der vorhergehenden Ansprüche,
wobei der momentane Schlupfsummenwert (SUM) auf den Wert des Schlupfsummen-Schwellenwerts (SUM-LIM) gesetzt wird, falls der momentane Schlupfsummenwert den Schlupfsummen-Schwellenwert überschreitet;
und/oder
wobei geprüft wird, ob der momentane Schlupfsummenwert (SUM) ein negatives Vorzeichen besitzt, wobei zutreffendenfalls der momentane Schlupfsummenwert auf den Wert Null gesetzt wird.

7. Verfahren nach einem der vorhergehenden Ansprüche,
wobei ein Schlupfzunahmewert gebildet wird, der einen zeitlichen Gradienten einer Schlupfzunahme repräsentiert, wobei vor oder in dem Schritt des Aufsummierens der Absolutwert oder ein hieraus bereits abgeleiteter Ersatzwert durch einen Ersatzwert ersetzt wird, der einem Produkt aus dem Absolutwert oder dem hieraus bereits abgeleiteten Ersatzwert und aus einem Schlupfzunahme-Gewichtungsfaktor entspricht, welcher von dem Schlupfzunahmewert abhängt.

8. Verfahren nach Anspruch 7,
wobei für das Bilden des Schlupfzunahmewerts eine Differenz zwischen dem in der momentanen Berechnungsschleife gebildeten Absolutwert und dem in einer vorhergehenden Berechnungsschleife gebildeten Absolutwert gebildet wird, wobei diese Differenz vorzugsweise durch einen Wert dividiert wird, welcher die Zeitdauer zwischen der vorhergehenden Berechnungsschleife und der momentanen Berechnungsschleife repräsentiert;
und/oder
wobei der Schlupfzunahme-Gewichtungsfaktor auf einen positiven Wert größer Eins gesetzt wird, falls der Schlupfzunahmewert einen positiven zeitlichen Gradienten einer Schlupfzunahme repräsentiert; und/oder
wobei der Schlupfzunahme-Gewichtungsfaktor umso größer gewählt wird, je größer der Schlupfzunahmewert ist;
und/oder
wobei der Schlupfzunahme-Gewichtungsfaktor auf den Wert Eins gesetzt wird, falls der Schlupfzunahmewert eine Schlupfabnahme repräsentiert.

9. Verfahren nach einem der vorhergehenden Ansprüche,
wobei geprüft wird, ob eine Schlupfschwingung vorliegt, wobei zutreffendenfalls vor oder in dem Schritt des Aufsummierens der Absolutwert oder ein hieraus bereits abgeleiteter Ersatzwert durch einen Ersatzwert ersetzt wird, der einem Produkt aus dem Absolutwert oder dem hieraus bereits abgeleiteten Ersatzwert und aus einem Schlupfschwingungs-Gewichtungsfaktor entspricht;
wobei für die Prüfung, ob eine Schlupfschwingung vorliegt, vorzugsweise überwacht wird, ob die ermittelten Schlupfwerte innerhalb eines vorbestimmten Zeitraums oder innerhalb einer vorbestimmten Anzahl von Berechnungsschleifen wenigstens einmal das Vorzeichen wechseln, insbesondere unter Berücksichtigung eines positiven und eines negativen Ansprechschwellenwerts; und/oder
wobei der Schlupfschwingungs-Gewichtungsfaktor vorzugsweise auf einen positiven Wert ungleich Eins gesetzt wird, falls festgestellt wird, dass eine Schlupfschwingung vorliegt, und auf den Wert Eins gesetzt wird, falls festgestellt wird, dass keine Schlupfschwingung vorliegt.

10. Verfahren nach einem der vorhergehenden Ansprüche,
wobei die Kupplung (16, 24, 32) in Abhängigkeit von dem erzeugten Steuersignal (CTL) für eine vorbestimmte Mindesthaltedauer in Schließrichtung betätigt wird, wobei die Kupplung in Öffnungsrichtung vorgespannt ist und selbsttätig öffnet, sobald die Kupplung nicht mehr in Schließrichtung betätigt wird und kein oder lediglich ein geringes Drehmoment über die Kupplung übertragen wird.

11. Verfahren nach einem der vorhergehenden Ansprüche,
wobei in dem Antriebsstrang des Kraftfahrzeugs mehrere Kupplungen (16, 24, 32) vorgesehen sind, insbesondere mehrere formschlüssig wirksame Kupplungen einer jeweiligen Differentialsperre, wobei für einige (24, 32) oder sämtliche der mehreren Kupplungen in der jeweiligen Berechnungsschleife die Schritte des Ermittelns wenigstens eines Schlupfwerts (SLP1, SLP2) der jeweiligen Kupplung, des Bildens eines Absolutwerts des Schlupfwerts (SLP1, SLP2) der jeweiligen Kupplung, des Aufsummierens des Absolutwerts oder eines hieraus abgeleiteten Ersatzwerts (RED1, RED2) auf einen zuletzt gebildeten Schlupfsummenwert zur Bildung eines momentanen Schlupfsummenwerts (SUM1, SUM2) der jeweiligen Kupplung, des Vergleichens des momentanen Schlupfsummenwerts (SUM1, SUM2) mit einem Schlupfsummen-Schwellenwert (SUM1-LIM, SUM2-LIM) der jeweiligen Kupplung, und des Erzeugens eines Steuersignals (CTL1, CTL2) zum Betätigen der jeweiligen Kupplung bei Erreichen oder Überschreiten des jeweiligen Schlupfsummen-Schwellenwerts durchgeführt werden.

12. Verfahren nach Anspruch 11,
wobei einige (24, 32) oder sämtliche der mehreren Kupplungen unabhängig voneinander gesteuert werden;
und/oder
wobei für das Steuern der mehreren Kupplungen (16, 24, 32) unterschiedliche Schwellenwerte, unterschiedliche Gewichtungsfaktoren und/oder unterschiedliche Mindesthaltedauern verwendet werden.

13. Verfahren nach Anspruch 11 oder 12,
wobei die mehreren Kupplungen wenigstens eine Kupplung (16) einer Zwischenachs-Differentialsperre (15) und wenigstens zwei Kupplungen (24, 32) einer jeweiligen Achs-Differentialsperre (19, 27) umfassen, wobei in der jeweiligen Berechnungsschleife für die Kupplung (16) der Zwischenachs-Differentialsperre (15) zumindest die folgenden Schritte durchgeführt werden:
- Ermitteln wenigstens eines Schlupfwerts (SLP3), der einen momentanen Schlupf zwischen verschiedenen Achsen (23, 31) des Kraftfahrzeugs repräsentiert;
- Bilden eines Absolutwerts des Schlupfwerts (SLP3), der dem Betrag des Schlupfwerts entspricht;
- Auswählen eines Maximalwerts (RED3') aus den in der jeweiligen Berechnungsschleife für eine Gruppe (16, 24, 32) von Kupplungen gebildeten Absolutwerten oder hieraus abgeleiteten Ersatzwerten (RED 1, RED2, RED3);
- Aufsummieren des Maximalwerts (RED3') oder eines hieraus abgeleiteten Ersatzwerts auf einen zuletzt gebildeten Maximal-Schlupfsummenwert, um für die Kupplung (16) der Zwischenachs-Differentialsperre (15) einen momentanen Maximal-Schlupfsummenwert (SUM3') zu bilden;
- Vergleichen des momentanen Maximal-Schlupfsummenwerts (SUM3') mit einem Maximal-Schlupfsummen-Schwellenwert (SUM3'-LIM); und
- Erzeugen eines Steuersignals (CTL3') zum Betätigen der Kupplung (16) der Zwischenachs-Differentialsperre (15), falls der momentane Maximal-Schlupfsummenwert den Maximal-Schlupfsummen-Schwellenwert erreicht oder überschreitet.

14. Verfahren nach Anspruch 13,
wobei das Auswählen des Maximalwerts (RED3') erst erfolgt, nachdem geprüft worden ist, ob die in der jeweiligen Berechnungsschleife gebildeten Absolutwerte durch einen jeweiligen Ersatzwert ersetzt werden sollen, und nachdem zutreffendenfalls der jeweilige Absolutwert durch den Ersatzwert (RED 1, RED2, RED3) ersetzt worden ist.

15. Antriebsstrang eines Kraftfahrzeugs, mit wenigstens einer Kupplung (16, 24, 32), insbesondere wenigstens einer formschlüssig wirksamen Kupplung einer Differentialsperre eines Geländefahrzeugs, und mit einer Steuereinrichtung, die dazu ausgebildet ist, in einer jeweiligen Berechnungsschleife zumindest die folgenden Schritte durchzuführen, insbesondere gemäß einem Verfahren nach einem der vorhergehenden Ansprüche:
- Ermitteln wenigstens eines Schlupfwerts (SLP), der einen momentanen Schlupf zwischen verschiedenen Achsen (23, 31) des Kraftfahrzeugs oder zwischen verschiedenen Rädern (21, 29) einer Achse repräsentiert;
- Bilden eines Absolutwerts des Schlupfwerts (SLP), der dem Betrag des Schlupfwerts entspricht;
- Aufsummieren des Absolutwerts oder eines hieraus abgeleiteten Ersatzwerts (RED) auf einen zuletzt gebildeten Schlupfsummenwert, um einen momentanen Schlupfsummenwert (SUM) zu bilden;
- Vergleichen des momentanen Schlupfsummenwerts (SUM) mit einem Schlupfsummen-Schwellenwert (SUM-LIM); und
- Erzeugen eines Steuersignals (CTL) zum Betätigen der Kupplung (16, 24, 32), falls der momentane Schlupfsummenwert den Schlupfsummen-Schwellenwert erreicht oder überschreitet.

## Claims

1. Method of controlling at least one coupling (16, 24, 32) in a power train of a motor vehicle, in particular of controlling at least one positively engaging coupling of a differential lock of an off-road vehicle,
in which at least the following steps are carried out in a respective calculation loop:
- determining at least one slip value (SLP), which represents an instantaneous slip between different axles (23, 31) of the motor vehicle or between different wheels (21, 29) of an axle;
- forming an absolute value of the slip value (SLP), which corresponds to the amount of the slip value;
- adding the absolute value or a substitute value (RED) derived herefrom to a last-formed slip sum value to form an instantaneous slip sum value (SUM);
- comparing the instantaneous slip sum value (SUM) with a slip sum threshold value (SUM-LIM); and
- generating a control signal (CTL) for actuating the coupling (16, 24, 32) if the instantaneous slip sum value reaches or exceeds the slip sum threshold value.

2. Method according to Claim 1,
wherein it is checked whether there is a slip oscillation, with the instantaneous slip sum value (SUM), the last-formed slip sum value or the slip sum threshold value (SUM-LIM) being modified if this is the case,
wherein, for modifying the instantaneous or last-formed slip sum value (SUM), the slip sum value is preferably multiplied by a weighting factor which has a value between zero and one or wherein, for modifying the slip sum threshold value (SUM-LIM), the slip sum threshold value is preferably multiplied by a weighting factor greater than one.

3. Method according to Claim 2,
wherein, for checking whether there is a slip oscillation, it is monitored whether the determined slip values (SLP) change sign at least once within a predefined time period or within a predefined number of calculation loops, in particular taking into account a positive and a negative response threshold value (SLP-LIM);
wherein preferably a slip oscillation monitoring value is increased by a predefined value if a change of sign of the determined slip values is found, with the slip oscillation monitoring value being reduced by a predefined value when a predetermined time interval or a predetermined number of calculation loops has elapsed, and with the existence of a slip oscillation being found if the slip oscillation monitoring value reaches or exceeds a slip oscillation threshold value.

4. Method according to one of the preceding claims, wherein the absolute value or substitute value (RED) is added to a predetermined initial value when the adding step is carried out for the first time;
and/or
wherein the absolute value of the slip value (SLP) is compared with a slip response threshold value (SLP-LIM), with the absolute value being substituted before or in the adding step by a substitute value (ABS), which has the value zero or a negative value if the absolute value is less than the slip response threshold value (SLP-LIM), wherein the substitute value preferably corresponds to a difference between the absolute value and the slip response threshold value if the absolute value is greater than the slip response threshold value.

5. Method according to one of the preceding claims,
wherein the absolute value of the slip value or a substitute value (ABS) already derived herefrom is reduced by a slip reducing value before or in the adding step to form a positive or negative substitute value (RED) on a case-by-case basis; or wherein the absolute value of the slip value or a substitute value (ABS) already derived herefrom is compared with a slip reducing threshold value (ABS-LIM), with the absolute value or the substitute value (ABS) already derived herefrom being substituted before or in the adding step by a substitute value (RED) having a negative sign if the absolute value or the substitute value (ABS) already derived herefrom falls below the slip reducing threshold value (ABS-LIM).

6. Method according to one of the preceding claims,
wherein the instantaneous slip sum value (SUM) is set to the value of the slip sum threshold value (SUM-LIM) if the instantaneous slip sum value exceeds the slip sum threshold value;
and/or
wherein it is checked whether the instantaneous slip sum value (SUM) has a negative sign, with the instantaneous slip sum value being set to the value zero if this is the case.

7. Method according to one of the preceding claims, wherein a slip increase value, which represents a time gradient of a slip increase, is formed, with the absolute value or a substitute value already derived herefrom being substituted before or in the adding step by a substitute value which corresponds to a product of the absolute value or the substitute value already derived herefrom and a slip increase weighting factor, which depends on the slip increase value.

8. Method according to Claim 7,
wherein a difference between the absolute value formed in the instantaneous calculation loop and the absolute value formed in a preceding calculation loop is formed for the forming of the slip increase value, with this difference preferably being divided by a value which represents the time duration between the preceding calculation loop and the instantaneous calculation loop;
and/or
wherein the slip increase weighting factor is set to a positive value greater than one if the slip increase value represents a positive time gradient of a slip increase;
and/or
wherein the slip increase weighting factor is selected to be all the greater, the greater the slip increase value is;
and/or
wherein the slip increase weighting factor is set to the value one if the slip increase value represents a slip decrease.

9. Method according to one of the preceding claims,
wherein it is checked whether there is a slip oscillation, with the absolute value or a substitute value already derived herefrom being substituted before or in the adding step by a substitute value which corresponds to a product of the absolute value or the substitute value already derived herefrom and a slip oscillation weighting factor if this is the case;
wherein, for checking whether there is a slip oscillation, it is preferably monitored whether the determined slip values change sign at least once within a predefined time period or within a predefined number of calculation loops, in particular taking into account a positive and a negative response threshold value;
and/or
wherein the slip oscillation weighting factor is preferably set to a positive value unequal to one if it is found that there is a slip oscillation and is set to the value one if it is found that there is no slip oscillation.

10. Method according to one of the preceding claims,
wherein the coupling (16, 24, 32) is actuated for a predefined minimum holding duration in the closing direction in dependence on the generated control signal (CTL), with the coupling being biased in the opening direction and opening automatically as soon as the coupling is no longer actuated in the closing direction and no torque or only a small torque is transferred via the coupling.

11. Method according to one of the preceding claims,
wherein a plurality of couplings (16, 24, 32) are provided in the power train of the motor vehicle, in particular a plurality of positively engaging couplings of a respective differential lock, wherein, for some (24, 32) or all of the plurality of couplings, the steps of determining at least one slip value (SLP1, SLP2) of the respective coupling, of forming an absolute value of the slip value (SLP1, SLP2) of the respective coupling, of adding the absolute value or a substitute value (RED1, RED2) derived herefrom to a last-formed slip sum value for forming an instantaneous slip sum value (SUM1, SUM2) of the respective coupling, of comparing the instantaneous slip sum value (SUM1, SUM2) with a slip sum threshold value (SUM1-LIM, SUM2-LIM) of the respective coupling, and of generating a control signal (CTL1, CTL2) for actuating the respective coupling on reaching or exceeding the respective slip sum threshold value are carried out in the respective calculation loop.

12. Method according to Claim 11,
wherein some (24, 32) or all of the plurality of couplings are controlled independently of one another;
and/or
wherein different threshold values, different weighting factors and/or different minimum holding durations are used for controlling the plurality of couplings (16, 24, 32).

13. Method according to Claim 11 or 12,
wherein the plurality of couplings comprise at least one coupling (16) of an inter-axle differential lock (15) and at least two couplings (24, 32) of a respective axle differential lock (19, 27), with at least the following steps being carried out for the coupling (16) of the inter-axle differential lock (15) in the respective calculation loop:
- determining at least one slip value (SLP3), which represents an instantaneous slip between different axles (23, 31) of the motor vehicle;
- forming an absolute value of the slip value (SLP3), which corresponds to the amount of the slip value;
- selecting a maximum value (RED3') from the absolute values formed for a group (16, 24, 32) of couplings in the respective calculation loop or from substitute values (RED1, RED2, RED3) derived herefrom;
- adding the maximum value (RED3') or a substitute value derived herefrom to a last-formed maximum slip sum value to form an instantaneous maximum slip value (SUM3') for the coupling (16) of the inter-axle differential lock (15);
- comparing the instantaneous maximum slip sum value (SUM3') with a maximum slip sum threshold value (SUM3'-LIM) ; and
- generating a control signal (CTL3') for actuating the coupling (16) of the inter-axle differential lock (15) if the instantaneous maximum slip sum value reaches or exceeds the maximum slip sum threshold value.

14. Method according to Claim 13,
wherein the selection of the maximum value (RED3') only takes place after it has been checked whether the absolute values formed in the respective calculation loop should be substituted by a respective substitute value and, if this is the case, after the respective absolute value has been substituted by the substitute value (RED1, RED2, RED3).

15. Power train of a motor vehicle, with at least one coupling (16, 24, 32), in particular at least one positively engaging coupling of a differential lock of an off-road vehicle, and with a control device, which is designed to carry out at least the following steps in a respective calculation loop, in particular by a method according to one of the preceding claims:
- determining at least one slip value (SLP), which represents an instantaneous slip between different axles (23, 31) of the motor vehicle or between different wheels (21, 29) of an axle;
- forming an absolute value of the slip value (SLP), which corresponds to the amount of the slip value;
- adding the absolute value or a substitute value (RED) derived herefrom to a last-formed slip sum value to form an instantaneous slip sum value (SUM);
- comparing the instantaneous slip sum value (SUM) with a slip sum threshold value (SUM-LIM); and
- generating a control signal (CTL) for actuating the coupling (16, 24, 32) if the instantaneous slip sum value reaches or exceeds the slip sum threshold value.

## Revendications

1. Procédé pour commander au moins un embrayage (16, 24, 32) dans une chaîne cinématique d'un véhicule à moteur, notamment pour commander au moins un embrayage agissant par complémentarité de forme d'un dispositif de verrouillage de différentiel d'un véhicule tout-terrain,
dans lequel au moins les étapes suivantes sont effectuées dans une boucle de calcul respective :
- déterminer au moins une valeur de patinage (SLP) qui représente un patinage courant entre différents essieux (23, 31) du véhicule à moteur ou entre différentes roues (21, 29) d'un essieu ;
- établir une valeur absolue de la valeur de patinage (SLP) qui correspond à l'importance de la valeur de patinage ;
- additionner la valeur absolue ou une valeur de substitution déduite à partir de celle-ci (RED) à une valeur de patinage établie en dernier, afin d'établir une valeur de patinage courante (SUM) ;
- comparer la valeur de patinage courante (SUM) à un seuil de somme de patinage (SUM-LIM) ; et
- générer un signal de commande (CTL) pour actionner l'embrayage (16, 24, 32), dans le cas où la valeur de patinage courante atteint ou dépasse le seuil de somme de patinage.

2. Procédé selon la revendication 1, dans lequel il est vérifié si une oscillation de patinage est présente, dans lequel la valeur de patinage courante (SUM), la valeur de patinage établie en dernier ou le seuil de somme de patinage (SUM-LIM) est le cas échéant modifié ;
dans lequel, pour la modification de la valeur de patinage courante ou établie en dernier (SUM), la valeur de patinage est de préférence multipliée par un facteur de pondération dont la valeur est comprise entre 0 et 1, ou dans lequel, pour la modification du seuil de somme de patinage (SUM-LIM), le seuil de somme de patinage est de préférence multiplié par un facteur de pondération supérieur à 1.

3. Procédé selon la revendication 2, dans lequel, pour vérifier si une oscillation de patinage est présente, il est contrôlé si les valeurs de patinage déterminées (SLP) à l'intérieur d'un intervalle de temps prédéterminé ou à l'intérieur d'un nombre prédéterminé de boucles de calcul changent de signe au moins une fois, notamment en tenant compte d'un seuil de réponse positif et d'un seuil de réponse négatif (SLP-LIM) ;
dans lequel une oscillation de la valeur de surveillance de patinage est de préférence augmentée d'une valeur prédéterminée, dans le cas où il est établi qu'il se produit un changement de signe des valeurs de patinage déterminées, dans lequel la valeur de surveillance de l'oscillation de patinage est réduite d'une valeur prédéterminée lorsqu'un intervalle de temps prédéterminé ou un nombre prédéterminé de boucles de calcul s'est écoulé, et dans lequel la présence d'une oscillation de patinage est établie dans le cas où l'oscillation de la valeur de surveillance de patinage atteint ou dépasse un seuil d'oscillation de patinage.

4. Procédé selon l'une quelconque des revendications précédentes, dans lequel, la première fois que l'étape d'addition est exécutée, la valeur absolue ou la valeur de substitution (RED) est additionnée à une valeur de départ prédéterminée ;
et/ou
dans lequel la valeur absolue de la valeur de patinage (SLP) est comparée à un seuil de réponse de patinage (SLP-LIM), dans lequel, avant ou lors de l'étape d'addition, la valeur absolue est remplacée par une valeur de substitution (ABS) dont la valeur est nulle ou négative, dans le cas où la valeur absolue est inférieure au seuil de réponse de patinage (SLP-LIM), dans lequel la valeur de substitution correspond de préférence à une différence entre la valeur absolue et le seuil de réponse de patinage, dans le cas où la valeur absolue est supérieure au seuil de réponse de patinage.

5. Procédé selon l'une quelconque des revendications précédentes,
dans lequel, avant ou lors de l'étape d'addition, la valeur absolue de la valeur de patinage ou une valeur de substitution (ABS) déjà déduite à partir de celle-ci est réduite d'une valeur de réduction du patinage, afin d'établir au cas par cas une valeur de substitution (RED) positive ou négative ;
ou
dans lequel la valeur absolue de la valeur de patinage ou une valeur de substitution (ABS) déjà déduite à partir de celle-ci est comparée à un seuil de réduction du patinage (ABS-LIM), dans lequel, avant ou lors de l'étape d'addition, la valeur absolue ou la valeur de substitution (ABS) est remplacée par une valeur de substitution (RED) déjà déduite à partir de celle-ci ayant un signe négatif, dans le cas où la valeur absolue ou la valeur de substitution (ABS) déjà déduite à partir de celle-ci s'abaisse en-dessous du seuil de réduction du patinage (ABS-LIM).

6. Procédé selon l'une quelconque des revendications précédentes, dans lequel la valeur de patinage courante (SUM) est réglée à la valeur du seuil de somme de patinage (SUM-LIM), dans le cas où la valeur de patinage courante dépasse le seuil de somme de patinage ;
et/ou
dans lequel il est vérifié si la valeur de patinage courante (SUM) possède un signe négatif, dans lequel la valeur de patinage courante est le cas échéant réglée à la valeur 0.

7. Procédé selon l'une quelconque des revendications précédentes,
dans lequel on établit une valeur d'augmentation du patinage qui représente un gradient temporel d'une augmentation du patinage, dans lequel, avant ou lors de l'étape d'addition, la valeur absolue ou une valeur de substitution déjà déduite à partir de celle-ci est remplacée par une valeur de substitution qui correspond à un produit de la valeur absolue ou de la valeur de substitution déjà déduite à partir de celle-ci par un facteur de pondération de l'augmentation du patinage qui dépend de la valeur d'augmentation du patinage.

8. Procédé selon la revendication 7,
dans lequel, pour établir la valeur d'augmentation du patinage, une différence entre la valeur absolue établie dans la boucle de calcul courante et la valeur absolue établie dans une boucle de calcul précédente est établie, dans lequel ladite différence est de préférence divisée par une valeur qui représente le temps entre la boucle de calcul précédente et la boucle de calcul courante ;
et/ou
dans lequel le facteur de pondération de l'augmentation du patinage est réglé à une valeur positive supérieure à 1, dans le cas où la valeur d'augmentation du patinage représente un gradient temporel positif d'une augmentation du patinage ;
et/ou
dans lequel le facteur de pondération de l'augmentation du patinage est sélectionné de manière à être d'autant plus élevé que la valeur d'augmentation du patinage est élevée ;
et/ou
dans lequel le facteur de pondération de l'augmentation du patinage est réglé à la valeur 1 dans le cas où la valeur d'augmentation du patinage représente une diminution du patinage.

9. Procédé selon l'une quelconque des revendications précédentes,
dans lequel il est vérifié si une oscillation de patinage est présente, dans lequel, avant ou lors de l'étape d'addition, la valeur absolue ou une valeur de substitution déjà déduite à partir de celle-ci est le cas échéant remplacée par une valeur de substitution qui correspond à un produit de la valeur absolue ou de la valeur de substitution déjà déduite à partir de celle-ci par un facteur de pondération de l'oscillation de patinage ;
dans lequel, pour vérifier si une oscillation de patinage est présente, il est de préférence contrôlé si les valeurs de patinage déterminées à l'intérieur d'un intervalle de temps prédéterminé ou à l'intérieur d'un nombre prédéterminé de boucles de calcul changent au moins une fois de signe, notamment en tenant compte d'un seuil de réponse positif ou négatif ;
et/ou
dans lequel le facteur de pondération de l'oscillation de patinage est de préférence réglé à une valeur positive différente de 1, dans le cas où il est établi qu'une oscillation de patinage est présente, et est réglée à la valeur 1, dans le cas où il est établi qu'aucune oscillation de patinage n'est présente.

10. Procédé selon l'une quelconque des revendications précédentes,
dans lequel l'embrayage (16, 24, 32) est actionné dans la direction de fermeture en fonction du signal de commande généré (CTL) pour une durée de maintien minimale prédéterminée, dans lequel l'embrayage est précontraint dans la direction d'ouverture et s'ouvre automatiquement dès que l'embrayage n'est plus actionné dans la direction de fermeture et qu'un couple de rotation nul ou très faible est transmis par l'intermédiaire de l'embrayage.

11. Procédé selon l'une quelconque des revendications précédentes, dans lequel il est prévu dans la chaîne cinématique du véhicule à moteur plusieurs embrayages (16, 24, 32), notamment plusieurs embrayages agissant par complémentarité de forme d'un dispositif de verrouillage de différentiel respectif, dans lequel, pour certains (24, 32) ou la totalité des multiples embrayages, les étapes consistant à déterminer au moins une valeur de patinage (SLP1, SLP2) de l'embrayage respectif, à établir une valeur absolue de la valeur de patinage (SLP1, SLP2) de l'embrayage respectif, à additionner la valeur absolue ou une valeur de substitution déduite à partir de celle-ci (RED1, RED2) à une valeur de patinage établie en dernier pour établir une valeur de patinage courante (SUM1, SUM2) de l'embrayage respectif, à comparer la valeur de patinage courante (SUM1, SUM2) à un seuil de somme de patinage (SUM1-LIM, SUM2-LIM) de l'embrayage respectif, et à générer un signal de commande (CTL1, CTL2) pour actionner l'embrayage respectif lorsque le le seuil de somme de patinage respectif est atteint ou dépassé, sont exécutées dans la boucle de calcul respective.

12. Procédé selon la revendication 11, dans lequel certains (24, 32) ou la totalité des multiples embrayages sont commandés indépendamment les uns des autres ;
et/ou
dans lequel, pour commander les multiples embrayages (16, 24, 32), on utilise des seuils différents, des facteurs de pondération différents et/ou des durées de maintien minimales différentes.

13. Procédé selon la revendication 11 ou 12,
dans lequel les multiples embrayages comprennent au moins un embrayage (16) d'un dispositif de verrouillage de différentiel d'essieu intermédiaire (15) et au moins deux embrayages (24, 32) d'un dispositif de verrouillage de différentiel d'essieu respectif (19, 27), dans lequel les étapes suivantes sont au moins effectuées dans la boucle de calcul respective pour l'embrayage (16) du dispositif de verrouillage de différentiel d'essieu intermédiaire (15) :
- déterminer au moins une valeur de patinage (SLP3) qui représente un patinage courant entre différents essieux (23, 31) du véhicule à moteur ;
- établir une valeur absolue de la valeur de patinage (SLP3) qui correspond à l'importance de la valeur de patinage ;
- sélectionner une valeur maximale (RED3') à partir des valeurs absolues établies dans la boucle de calcul respective ou de valeurs de substitution (RED1, RED2, RED3) déduites à partir de celles-ci pour un groupe (16, 24, 32) d'embrayages ;
- additionner la valeur maximale (RED3') ou une valeur de substitution déduite à partir de celle-ci à une valeur de patinage maximale établie en dernier, afin d'établir une valeur de patinage maximale courante (SUM3') pour l'embrayage (16) du dispositif de verrouillage de différentiel d'essieu intermédiaire (15) ;
- comparer la valeur de patinage maximale courante (SUM3') à un seuil de somme de patinage maximal (SUM3'-LIM) ; et
- générer un signal de commande (CTL3') pour actionner l'embrayage (16) du dispositif de verrouillage de différentiel d'essieu intermédiaire (15), dans le cas où la valeur de patinage maximale courante atteint ou dépasse le seuil de somme de patinage maximal.

14. Procédé selon la revendication 13,
dans lequel la sélection de la valeur maximale (RED3') n'a lieu qu'après qu'il a été vérifié si les valeurs absolues établies dans la boucle de calcul respective doivent être remplacées par une valeur de substitution respective, et qu'après que la valeur absolue respective a le cas échéant été remplacée par la valeur de substitution (RED1, RED2, RED3).

15. Chaîne cinématique d'un véhicule à moteur, comportant au moins un embrayage (16, 24, 32), notamment au moins un embrayage agissant par complémentarité de forme d'un dispositif de verrouillage de différentiel d'un véhicule tout-terrain, et comportant un dispositif de commande qui est conçu pour mettre en oeuvre au moins les étapes suivantes dans une boucle de calcul respective, notamment conformément à un procédé selon l'une quelconque des revendications précédentes :
- déterminer au moins une valeur de patinage (SLP) qui représente un patinage courant entre différents essieux (23, 31) du véhicule à moteur ou entre différentes roues (21, 29) d'un essieu ;
- établir une valeur absolue de la valeur de patinage (SLP), qui correspond à l'importance de la valeur de patinage ;
- additionner la valeur absolue ou une valeur de substitution déduite à partir de celle-ci (RED) à une valeur de patinage établie en dernier, afin d'établir une valeur de patinage courante (SUM) ;
- comparer la valeur de patinage courante (SUM) à un seuil de somme de patinage (SUM-LIM) ; et
- générer un signal de commande (CTL) pour actionner l'embrayage (16, 24, 32), dans le cas où la valeur de patinage courante atteint ou dépasse le seuil de somme de patinage.
